# EUROPEAN PATENT SPECIFICATION

(11) **EP 2 910 048 B1**
(45) Date of publication and mention of the grant of the patent: **08.03.2023**
(21) Application number: 12851262.1
(22) Date of filing: 20.11.2012
(51) Int. Cl.: H04W 4/02, G01S 19/49, G01S 19/52, G01S 19/39, G01S 19/40, H04W 4/021, A01K 15/02

(54) **METHOD AND APPARATUS TO DETERMINE ACTIONABLE POSITION AND SPEED IN GNSS APPLICATIONS**
VERFAHREN UND VORRICHTUNG ZUR BESTIMMUNG VON AKTIONSFÄHIGER POSITION UND GESCHWINDIGKEIT IN GNSS-ANWENDUNGEN
PROCÉDÉ ET APPAREIL POUR DÉTERMINER UNE POSITION ET UNE VITESSE ACTIONNABLES DANS DES APPLICATIONS GNSS

(30) Priority: 22.11.2011 US 201113302447
(43) Date of publication of application: 26.08.2015
(73) Proprietor: Radio Systems Corporation, Knoxville, TN 37932 (US)
(72) Inventor: MCFARLAND, Scott, Knoxville Tennessee 37922 (US); GRIFFITH, Keith, Oneida Tennessee 37841 (US); SELTZER, Rick, Knoxville Tennessee 37922 (US)
(74) Representative: Grünecker Patent- und Rechtsanwälte PartG mbB
(86) International application number: PCT/US2012/066034
(87) International publication number: WO 2013/078188

(56) References cited:
- US-A1- 2001 037 179
- US-A1- 2002 017 995
- US-A1- 2003 146 871
- US-A1- 2009 018 772
- US-A1- 2009 115 656
- US-A1- 2010 070 179
- US-A1- 2010 113 061
- US-A1- 2010 318 294
- US-A1- 2011 046 915
- US-A1- 2011 231 050
- US-B1- 6 581 546

## Description

### CROSS-REFERENCE TO RELATED APPLICATIONS

### Not Applicable

### FIELD OF INVENTION

The present general inventive concept relates to an apparatus and method to track mobile subjects relative to boundaries, and, more particularly, to an apparatus and method to track mobile subjects relative to boundaries with various Global Navigation Satellite Systems (GNSS) and motion detector values.

### BACKGROUND

It is often desirable to monitor a mobile subject so that the mobile subject may be contained within a selected boundary, and to identify when the mobile subject has left such a boundary. A conventional method of monitoring the movement of a mobile subject and detecting whether the mobile subject has left a selected boundary, or containment area, is the employment of a GNSS fencing system. US 6,581,546 B1 concerns animal containment through a system having a containment collar and GPS (Global Positioning System), RF (Radio Frequency), or INS (Inertial Navigation System) data, or a combination thereof, to define the perimeter of a containment area. From US 2009/018772 A1, a position sensing device and method are known for executing correction processing based on a reliability and error index of each component of GPS output data to increase positioning accuracy. US 2009/115656 A1 discloses systems and methods for global differential positioning.

Various conventional GNSS fencing systems, which employ GNSS systems such as the Global Positioning System (GPS) of the United States, the Russian GLONASS, etc., have been typically used to define the boundaries of a selected containment area and monitor the movement of a mobile subject relative to the selected containment area. In such systems, the position and speed of the mobile subject to be confined are monitored through the use of the GNSS satellites to determine if and when the mobile subject crosses a boundary. Typically, a mobile device to be provided to the mobile subject is used to program the boundary of the selected confinement area as the device is moved along such boundary. Alternatively, the coordinates of the boundary vertices may be programmed directly into the mobile device. If the mobile subject provided with the mobile device crosses the boundary, a corrective stimulus can be provided to the mobile subject.

These conventional GNSS fencing systems typically employ differential GNSS to improve the perceived position and speed of a mobile subject. Such a practice improves the accuracy of determining the mobile subject's position when compared to a non-differential system by incorporating pseudo-range (or distance) corrections for each satellite observable from the position of the mobile subject. These pseudo-range errors arise due to variations in the atmosphere or signal path for each satellite signal as the signal travels to a receiver provided to the mobile subject. The pseudo-range corrections are computed by a fixed GNSS receiver at a known location, and communicated to the mobile subject receiver over a suitable communication link.

As described above, conventional GNSS position and speed determining systems perform best in fencing or boundary detection applications when favorable signal conditions exist. However, anomalies in GNSS tracking often occur even under optimal conditions. Also, unfavorable signal conditions may exist at the location of the mobile subject that do not exist at the fixed GNSS receiver, and therefore are not recognized as such by the fixed GNSS receiver. In situations in which unfavorable signal conditions exist, errors produced while determining position and speed frequently result in a false boundary violation. Such false boundary violations may erode consumer confidence, and/or may have a negative psychological effect on mobile subjects which are provided with the mobile device to restrict the mobile subject's movement to within the containment area. For instance, if the mobile subject is a pet, such as a dog, which may receive a corrective stimulus as a result of determining that a boundary has been violated, receiving the corrective stimulus while not actually violating the containment boundary may disrupt the training process.

As such, there exists a desire for a mobile position determining apparatus that can recognize, quantify, and mitigate position and speed errors, especially under unfavorable GNSS signal conditions, for the purpose of reducing the probability of false violation determinations.

### BRIEF SUMMARY

The present general inventive concept provides a method, and an apparatus to perform the method, of determining an actionable position and speed of a mobile subject.

Additional aspects and advantages of the present general inventive concept will be set forth in part in the description which follows, and, in part, will be obvious from the description, or may be learned by practice of the present general inventive concept.

The invention provides an apparatus according to claim 1, a method according to claim 6, and a computer-readable storage medium according to claim 10. Preferred embodiments are set forth in the dependent claims.

Other features and aspects may be apparent from the following detailed description, the drawings, and the claims.

### BRIEF DESCRIPTION OF THE FIGURES

The following example embodiments are representative of example techniques and structures designed to carry out the objects of the present general inventive concept, but the present general inventive concept is not limited to these example embodiments. In the accompanying drawings and illustrations, the sizes and relative sizes, shapes, and qualities of lines, entities, and regions may be exaggerated for clarity. A wide variety of additional embodiments will be more readily understood and appreciated through the following detailed description of the example embodiments, with reference to the accompanying drawings in which:
FIG. 1 illustrates a conventional differential GNSS system used to determine a mobile position and speed;
FIG. 2 illustrates the determination of the position and speed of a mobile device at discrete time intervals with a conventional differential GNSS system;
FIG. 3 illustrates a conventional mobile position and speed determining device;
FIG. 4 illustrates a conventional mobile position and speed determining device which includes a position pinning unit;
FIGS. 5A-5B illustrate an actionable position and speed determining apparatus according to an embodiment of the present general inventive concept;
FIG. 6 is a flow chart illustrating the initialization of an actionable position according to an embodiment of the present general inventive concept;
FIG. 7 illustrates the computation of a position difference between a current GNSS position and a prior actionable position according to an embodiment of the present general inventive concept;
FIG. 8 illustrates the computation of a short term GNSS solution metric based on HDOP and an estimated horizontal position error according to an embodiment of the present general inventive concept;
FIG .9 is a flow chart illustrating the computation of an initial position degradation factor and a long term GNSS solution metric based on HDOP and an estimated horizontal position error according to an embodiment of the present general inventive concept;
FIG. 10 is a flow chart illustrating the computation of a further position degradation factor based on a long term solution metric and a constant indicative of a prolonged poor long term position error threshold according to an embodiment of the present general inventive concept;
FIG. 11 is a flow chart illustrating the computation of a further position degradation factor based on GNSS signal metrics according to an embodiment of the present general inventive concept;
FIG. 12 is a flow chart illustrating the limiting of the position degradation factor according to an embodiment of the present general inventive concept;
FIG. 13 illustrates the computation of a degraded position difference according to an embodiment of the present general inventive concept;
FIG. 14 illustrates the computation of a short term GNSS solution metric based on HDOP and an estimated speed error according to an embodiment of the present general inventive concept;
FIG. 15 is a flow chart illustrating the computation of an initial position degradation factor and a long term GNSS solution metric based on HDOP and an estimated speed error according to an embodiment of the present general inventive concept;
FIG. 16 is a flow chart illustrating the computation of a further speed degradation factor based on a long term solution metric and a constant indicative of a prolonged poor long term speed error threshold according to an embodiment of the present general inventive concept;
FIG. 17 is a flow chart illustrating the computation of a further speed degradation factor based on GNSS signal metrics according to an embodiment of the present general inventive concept;
FIG. 18 is a flow chart illustrating the limiting of the speed degradation factor according to an embodiment of the present general inventive concept;
FIG. 19 is a flow chart illustrating a determination of the GNSS position and speed being useable or unuseable based on the short term GNSS solution metrics according to an embodiment of the present general inventive concept;
FIG. 20 illustrates the computation of a speed estimate based on mobile subject attributes according to an embodiment of the present general inventive concept;
FIG. 21 illustrates the computation of a degraded speed estimate according to an embodiment of the present general inventive concept;
FIG. 22 is a flow chart illustrating the computation of an actionable speed based on a GNSS fix quality according to an embodiment of the present general inventive concept;
FIG. 23 is a flow chart illustrating a testing of the actionable speed against a minimum actionable speed constant and motion detector results according to an embodiment of the present general inventive concept;
FIG. 24 is a flow chart illustrating the computation of a new position track coefficient based on the actionable speed according to an embodiment of the present general inventive concept;
FIG. 25 is a flow chart illustrating the computation of a new actionable position based on a fix quality being useable according to an embodiment of the present general inventive concept;
FIG. 26 illustrates a true path taken by a mobile device through a confinement area used in a GNSS fencing application;
FIG. 27 illustrates the GNSS positions captured by the movement of the mobile device along the true path illustrated in FIG. 26, and;
FIG. 28 illustrates the actionable positions captured by the movement of the mobile device along the true path illustrated in FIG. 26.

### DETAILED DESCRIPTION

Reference will now be made to various example embodiments of the present general inventive concept, examples of which are illustrated in the accompanying drawings and illustrations. The example embodiments are described herein in order to explain the present general inventive concept by referring to the figures.

The following detailed description is provided to assist the reader in gaining a comprehensive understanding of the methods, apparatuses, and/or systems described herein. Accordingly, various changes, modifications, and equivalents of the methods, apparatuses, and/or systems described herein will be suggested to those of ordinary skill in the art. The described progression of processing operations described are merely examples, however, and the sequence of operations is not limited to that set forth herein and may be changed as is known in the art, with the exception of operations necessarily occurring in a certain order. Also, description of well-known functions and constructions may be omitted for increased clarity and conciseness.

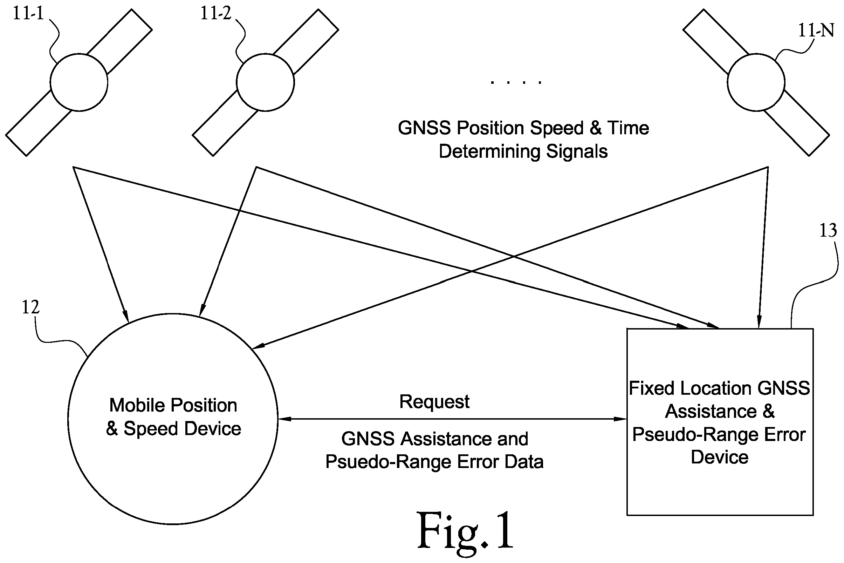

A conventional differential GNSS system is illustrated in FIG. 1. A plurality of satellites 11-1, 11-2,...11-N transmit GNSS position speed and time determining signals that are received by a mobile position and speed determining device 12, which is provided to a mobile subject, and by a fixed location GNSS assistance and pseudo-range error device 13. The mobile position and speed determining device 12 also sends requests for GNSS assistance and pseudo-range error data to the fixed location GNSS assistance and pseudo-range error device 13, and said data is accordingly returned to the mobile position and speed determining device 12. Because of the immobile arrangement of the fixed location GNSS assistance and pseudo-range error device 13, anomalies existing due to the atmosphere and signal path variations, etc., may be readily recognized so that corrective data may be transmitted to and used by the mobile position and speed determining device 12.

In conventional GNSS fencing systems, the containment area is described by a collection of vertices (i.e., latitude, longitude) and the lines (straight line segments, arcs, curves, etc.) that connect consecutive vertices. As the desired operation of the system is to contain the mobile subject within close proximity to the containment area, the mobile position and speed determining device 12 is provided to the mobile subject. The device 12 is typically worn by the mobile subject, or attached to the mobile subject by a suitable means. As the mobile subject, and therefore the mobile position and speed determining device 12, moves, GNSS position and speed determinations are determined at discrete time intervals to determine the new position and speed of the mobile subject. The determined position and speed are tested against one or more metrics or conditions that constitute a boundary violation regarding the containment area. Typically, the time intervals at which the position and speed are determined range from 250 ms to 1 second.

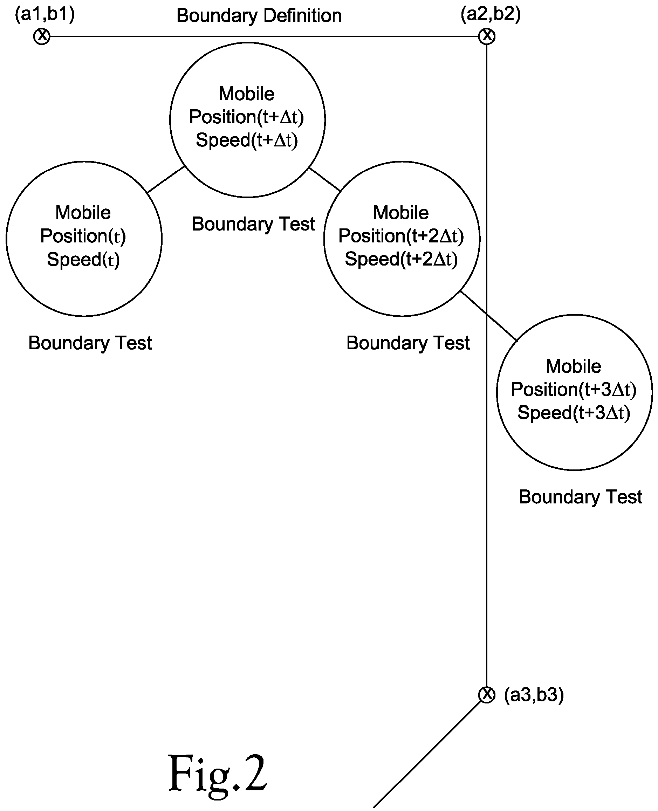

FIG. 2 illustrates the determination of the position and speed of a mobile device at discrete time intervals with a conventional differential GNSS system. A portion of a containment area is illustrated by the vertices (a1,b1), (a2,b2), and (a3,b3), as well as the lines connecting these consecutive vertices, which define the boundary of the containment area. A boundary test is conducted at an initial time (t) to determine the position and speed of the mobile device, which is provided to a mobile subject. Subsequent boundary tests are conducted at times (t+Δt), (t+2Δt), and (t+3Δt). As can be seen by the last boundary test illustrated in FIG. 2, the position of the mobile device should be determined to be outside of the containment area.

Conventional GNSS fencing systems utilize one or more tests regarding the determined position and speed of the mobile device to determine whether a boundary violation of the containment area has occurred. A typical test is simply determining whether the current position of the mobile device is within or outside of the defined containment area. Another typical test is a determination of the shortest distance to the boundary. Yet another typical test is a determination of the shortest anticipated time to reach the boundary based on a unit direction vector and speed. As illustrated in FIG. 2, the determination of the position and speed of the mobile device at (t+2Δt) will likely result in a direction vector which indicates that a boundary violation is imminent.

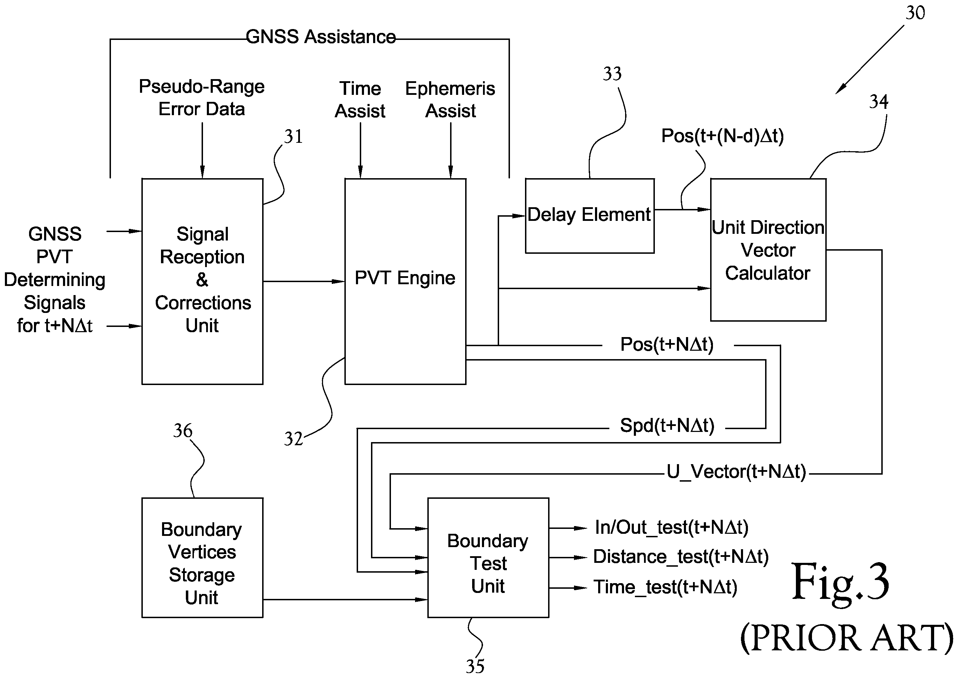

FIG. 3 illustrates a conventional mobile position and speed determining device 30. A signal reception and corrections unit 31 receives GNSS PVT (position, velocity, time) determining signals for a time (t+NΔt) from a number of GNSS satellites. The signal reception and corrections unit 31 also receives GNSS assistance data in the form of pseudo-range error data from a fixed location GNSS assistance and pseudo-range error device. After correcting the received satellite signals according to the pseudo-range error data, the signal reception and corrections unit 31 transmits the resulting data to a PVT engine 32. The PVT engine 32 receives the corrected data from the signal reception and corrections unit 31, along with additional GNSS assistance data in the form of time assist and ephemeris assist data, and determines a position Pos(t+NΔt) and speed Spd(t+NΔt) for the mobile position and speed determining device 30 at the time t+NΔt. The PVT engine 32 transmits the position Pos(t+NΔt) to a delay element 33, unit direction vector calculator 34, and a boundary test unit 35. The delay element 33 introduces a delay d to the position Pos(t+NΔt) to generate and transmit a delayed position Pos(t+(N-d)Δt) to the unit direction vector calculator 34. The unit direction vector calculator 34 receives the position Pos(t+NΔt) and the delayed position Pos(t+(N-d)Δt) and determines a unit direction vector U_vector(t+ NΔt), which is transmitted to the boundary test unit 35. The boundary test unit also receives the speed Spd(t+NΔt) from the PVT engine 32.

The boundary test unit 35 also receives the boundary vertices (a1,b1), (a2,b2),...(aN,bN) of the containment area from a boundary vertices storage unit 36. Using the received boundary vertices, speed Spd(t+NΔt), position Pos(t+NΔt), and unit direction vector U_vector(t+NΔt), the boundary test unit 35 determines whether the mobile position and speed determining device 30 is currently inside the containment area, the shortest distance from the device 30 to the boundary of the containment area, and the shortest anticipated time to reach the boundary. As illustrated in FIG. 3, the boundary test unit 35 outputs the results of these determinations as In/Out_test(t+NΔt), Distance_test(t+NΔt), and Time_test(t+NΔt). These resulting signals may be used to trigger a stimulus from the device 30.

Typically, the conventional differential GNSS fencing system functions less erratically in situations in which the mobile device receiving the GNSS signals is operating under favorable GNSS signal conditions. However, especially in situations in which common signal impairments exits, such as when the mobile device has moved inside a home or other structure, is under heavy foliage, etc., the resulting differential GNSS position and speed determinations may still contain substantial and unresolvable errors. While the conventional differential GNSS system is an improvement over a non-differential GNSS system, the conventional differential GNSS system cannot adequately correct for these commonplace signal impairments, and the result will often be false boundary violation determinations.

A conventional improvement over the typical differential GNSS fencing system is the operation of "position pinning". A position pinning algorithm will "pin", or hold constant, a GNSS position in the absence of a sufficient change in position or speed. Position pinning was developed to eliminate drift in the GNSS position determination in the event that the mobile device is stationary. When sufficient position change or speed is detected, the position pinning algorithm is bypassed.

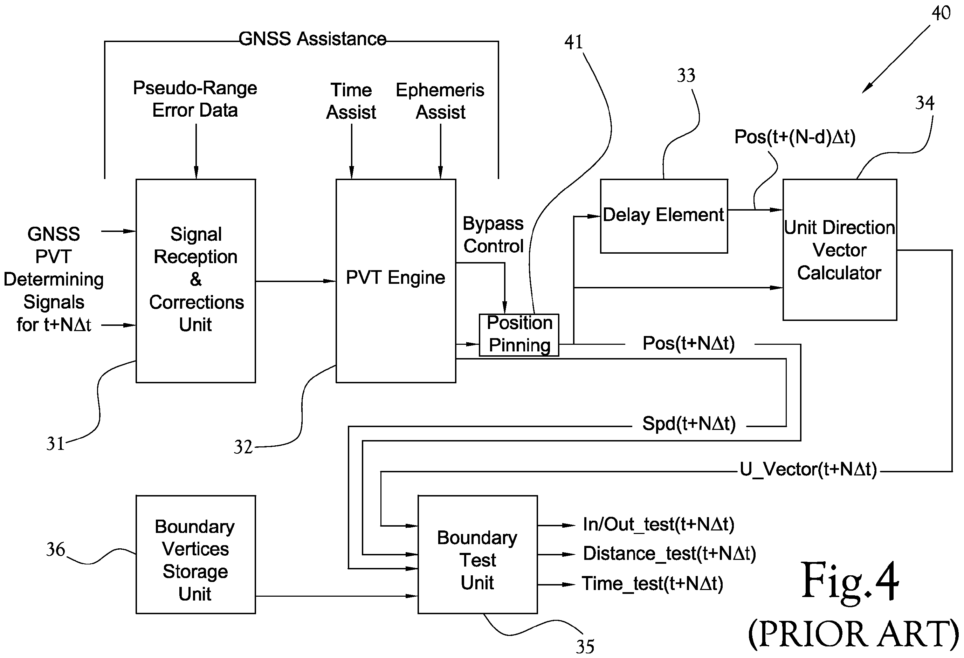

FIG. 4 illustrates a conventional mobile position and speed determining device 40 which includes a position pinning unit 41. As illustrated in FIG. 4, the device 40 is similar to the device 30 illustrated in FIG. 3, with the addition of the position pinning unit 41. The PVT engine 32 controls the position pinning unit 41 to be bypassed in the event that sufficient position change or speed are detected.

As previously described, the addition of the position pinning unit to the mobile position and speed determining device 40 aids in maintaining a nearly constant GNSS position for the mobile device while the mobile device is not moving. Thus, some potential erratic position determinations may be avoided in situations in which the mobile device is stationary. However, this improvement does nothing to mitigate the effects of the described common GNSS signal impairments in situations in which the mobile device is moving.

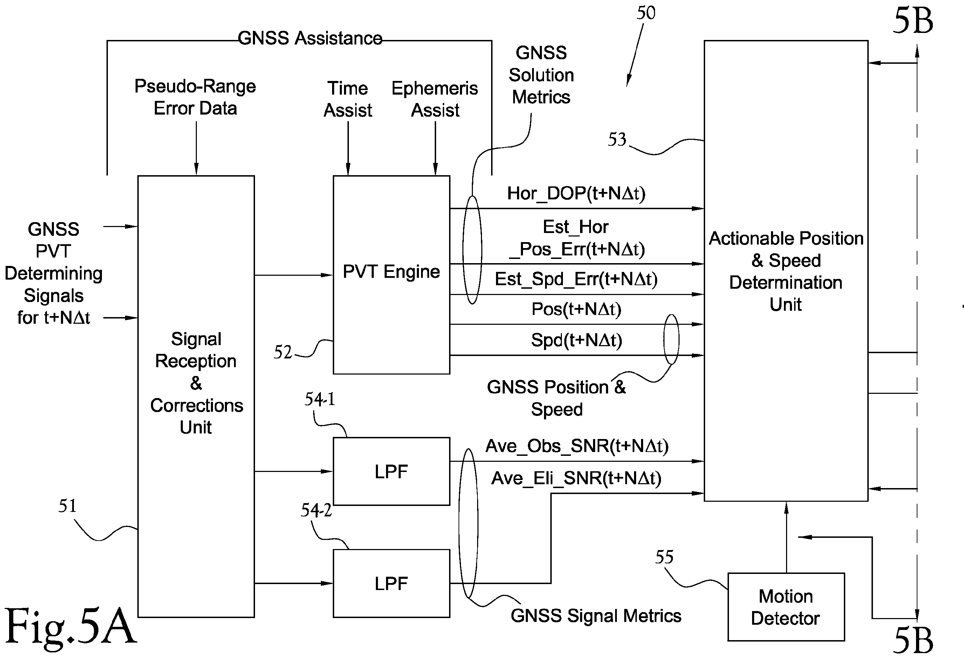

FIGS. 5A-5B illustrate an actionable GNSS position and speed determining apparatus 50 according to an embodiment of the present general inventive concept. Each of FIGS. 5A-5B illustrate portions of this example apparatus, which are separated by the illustrated cut line. The actionable position and speed determining apparatus 50 may be referred to interchangeably throughout this description as the "mobile device".

It is noted that the apparatus of FIGS. 5A-5B is merely one example embodiment of the present general inventive concept. Further, there are many different possible physical configurations by which to implement the illustrated embodiment. For example, two or more of the units may be combined in a single integrated circuit chip, two or more integrated circuit chips may be combined on one or more chipsets, and so on. Also, some or all of the described operations may be performed and/or controlled by software, and the various described units, elements, etc., may be functional blocks of the software. Such software may be executed by a computer, machine, processor, etc., provided to or as the apparatus 50, with input and output processing that produces the described results.

The mobile device 50 may be provided in a fixed or removably attached manner to any number of possible mobile subjects. The mobile subjects may be human, animal, mechanical, etc. For example, the mobile device 50 may be affixed to a dog collar which is worn by a dog, for the purpose of confining the dog to a prescribed area such as a yard of the home in which the dog's owner resides. This is merely one non-limiting example of how the mobile device 50 may be utilized.

The actionable GNSS position and speed determining apparatus 50, or mobile device 50, derives a mobile subject's "actionable" position and speed for applications such as, for example, GNSS fencing, boundary detection, containment, and so on. The actionable position refers to a position which is relied upon for more accurate position and speed determination than only the GNSS derived position and speed. The actionable position and speed are quantities derived from the GNSS position and speed, confirmation of movement of the mobile device 50 from an independent motion detector, and one or more of GNSS signal metrics, GNSS solution metrics, and the previous determined actionable position and speed. The actionable position and speed may track the GNSS position and speed very closely under favorable signal conditions and with a confirmed modest speed. However, as GNSS signal conditions degrade, or GNSS speed decreases, the actionable position and speed may track the GNSS position and speed less closely. In situations in which the GNSS signal conditions and/or GNSS speed are below acceptable levels, the actionable position and speed may cease tracking the GNSS position and speed altogether. The determination of the actionable position and speed results in a much lower probability of false boundary violation determination.

Additionally, practical energy constraints typically require mobile devices to conserve energy whenever possible. For instance, if the mobile subject, and therefore the mobile device 50, is not in close proximity to any boundary segment of the containment area, and is motionless (as confirmed by the previously noted independent motion detector), an opportunity is available for the mobile device 50 to conserve energy by ceasing GNSS navigation. At a later point in time, when motion of the mobile subject is detected by the independent motion detector, the actionable position may be initialized as a location based upon the conditions that existed at the point at which the previous navigation was stopped. If the mobile subject was within or in close proximity to the containment area, the actionable position may be initialized as a known location, or "safe start", that is located within the containment area. The safe start location, which will be described in more detail later in this description, may be determined at the discretion of the owner or operator of the mobile device 50. Otherwise, if the mobile subject was not in close proximity to the containment area, the actionable position may be initialized with the last known actionable position. When re-starting navigation, a rapid "time-to-first-fix" may be maintained with pertinent assistance data provided over, for example, an RF communication link. Assistance data may be available to the mobile device 50 regardless of the navigation state of the mobile device 50, as a fixed "base" GNSS receiver may maintain and make available accurate time, pseudo-range corrections, ephemeris data, and an ionic correction model.

It is noted that the inclusion of an independent motion detector merely means that motion is detected independently of the processing of the GNSS signals received by the mobile device 50. According to various example embodiments, the independent motion detector may be a separately formed device provided to the mobile device 50, or integrated with the mobile device 50.

Referring to the example embodiment of the present general inventive concept illustrated in FIGS. 5A-5B, the actionable GNSS position and speed determining apparatus 50 includes a signal reception and corrections unit 51, a PVT engine 52, an actionable position 8v speed determination unit 53, first and second low-pass filters 54-1 and 54-2, an independent motion detector 55, first and second delay elements 56-1 and 56-2, a unit direction vector calculation unit 57, a boundary test unit 58, and a boundary vertices storage unit 59. Various other example embodiments of the present general inventive concept may include fewer, or additional, elements than those illustrated in discussed in regard to this example. Some or all of the described operations may be performed and/or controlled by software, and the various described units, elements, etc., may be functional blocks of the software.

The signal reception and corrections unit 51 receives GNSS PVT (position, velocity, time) determining signals for a time (t+NΔt) from a number of GNSS satellites. The signal reception and corrections unit 51 may have an integrated receiver to directly receive the signals, or may receive the signals from an additional receiver (not shown). The signal reception and corrections unit 51 also receives GNSS assistance data in the form of pseudo-range error data from a fixed location GNSS assistance and pseudo-range error device, or a similar device to deliver such GNSS assistance data. After correcting the received satellite signals according to the pseudo-range error data, which is discussed in more detail later in this description, the signal reception and corrections unit 51 transmits the resulting data to the PVT engine 52. The signal reception and corrections unit 51 also transmits corrected signals to the first and second low-pass filters 54-1 and 54-2.

The PVT engine 52 receives the corrected data from the signal reception and corrections unit 51, along with additional GNSS assistance data in the form of time assist and ephemeris assist data, and generates the GNSS position, GNSS speed, and several GNSS solution metrics, which are transmitted to the actionable position 8v speed determination unit 53. The processing of these several signals will be discussed in more detail later in this description.

The GNSS solution metrics processed and transmitted from the PVT engine 52 include a horizontal dilution of precision (HDOP) Hor_DOP(t+NΔt), an estimated horizontal position error Est_Hor_Pos_Err(t+NΔt), and an estimated speed error Est_Spd_Err(t+NΔt). The GNSS position is noted in the drawing as Pos(t+NΔt), and the GNSS speed is noted as Spd(t+NΔt).

The first and second low-pass filters 54-1 and 54-2 process the data received from the signal reception and corrections unit 51 and respectively compute and transmit an average observable signal to noise ratio Ave_Obs_SNR(t+NΔt), which is a quantity representative of the aggregate observable (all used GNSS signals) GNSS signal to noise ratio, and an average eligible signal to noise ratio Ave_Eli_SNR(t+NΔt), which is a quantity representative of the aggregate eligible (all decodable GNSS signals emanating from satellites above a preset elevation threshold) GNSS signal to noise ratio, to the actionable position 8v speed determination unit 53. At each epoch (i.e., Δt) a new Ave_Obs_SNR(t+NΔt) and a new Ave_Eli_SNR(t+NΔt) are computed. These are each fed into the first and second low-pass filters 54-1 and 54-2. The first and second low-pass filters 54-1 and 54-2 function to allow a slow increase in each average and a rapid decrease in the average. The time constant for the increase may be on the order of 15*Δt. The average observable signal to noise ratio and average eligible signal to noise ratio are referred to as GNSS signal metrics.

The actionable position 8v speed determination unit 53 receives the horizontal dilution of precision, estimated horizontal position error, estimated speed error, GNSS position, GNSS speed, average observable signal to noise ratio, average eligible signal to noise ratio, and prior actionable position and speed, and processes the actionable position Act_Pos(t+NΔt) and actionable speed Act_Spd(t+NΔt) accordingly. The actionable position 8v speed determination unit 53 also receives a confirmation signal from an independent motion detector 55 to determine how to process the actionable position and speed. The processing of this data is discussed in more detail later in this description.

The actionable position & speed determination unit 53 transmits the actionable position to a first delay element 56-1, the unit direction vector calculation unit 57, and the boundary test unit 58. The first delay element 56-1 introduces a delay d to the actionable position to generate and transmit a delayed actionable position Act_Pos(t+(N-d)Δt) to the unit direction vector calculation unit 57. The delayed actionable position is also fed back to the actionable position & speed determination unit 53. The unit direction vector calculation unit 57 receives the actionable position and the delayed actionable position and generates a unit direction vector U_Vector(t+NΔt), which is then transmitted to the boundary test unit 58.

The actionable position & speed determination unit 53 transmits the actionable speed to the second delay element 56-2 and the boundary test unit 58. The second delay element 56-2 introduces a delay d to the actionable speed to generate and transmit a delayed actionable speed Act_Spd(t+(N-d)Δt) back to the actionable position & speed determination unit 53.

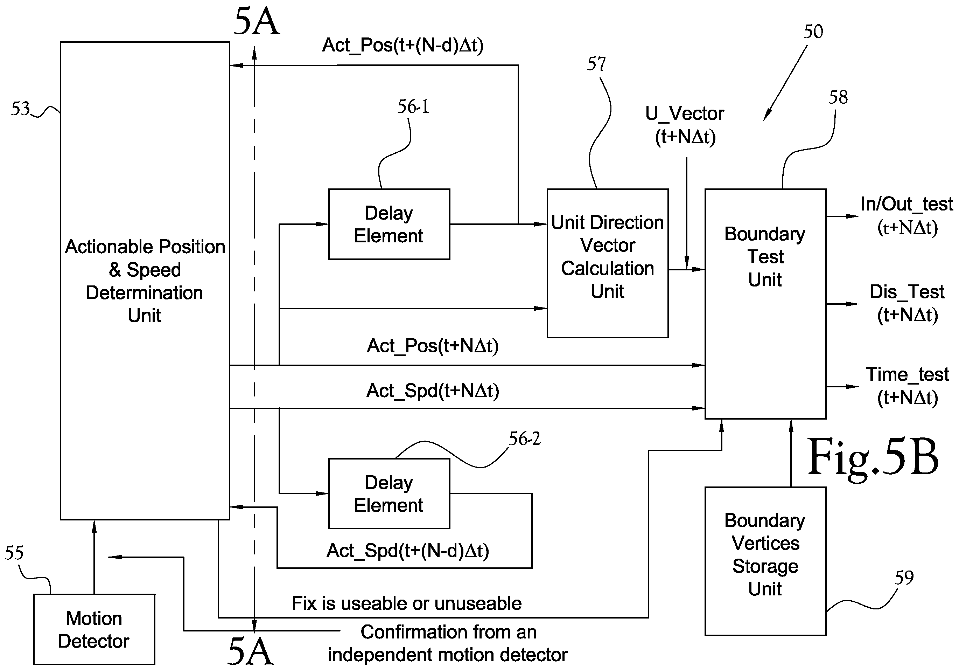

The boundary test unit 58 receives the unit direction vector, the actionable position, the actionable speed and a signal indicating whether the GNSS position and speed fix is useable. The fix quality signal is transmitted to the boundary test 58 from the actionable position & speed determination unit 53. The boundary test unit 58 also receives the boundary vertices (a1,b1), (a2,b2),...(aN,bN) of the containment area from the boundary vertices storage unit 59. Using the received boundary vertices, actionable position, actionable speed, unit direction vector, and fix quality, the boundary test unit 58 generates data indicating whether the mobile device 50 is currently inside or outside of the containment area, the shortest distance from the mobile device 50 to the boundary of the containment area, and the shortest anticipated time to reach the boundary. As illustrated in FIG. 5B, the boundary test unit 58 outputs the results of these determinations as In/Out_test(t+NΔt), Distance_test(t+NΔt), and Time_test(t+NΔt). These resulting signals may be used to trigger a stimulus (not shown) that may be provided to, or in communication with, the device 50. The processing of this data will be described in more detail later in this description.

Various operations which may be performed according to various embodiments of the present general inventive concept will be described below.

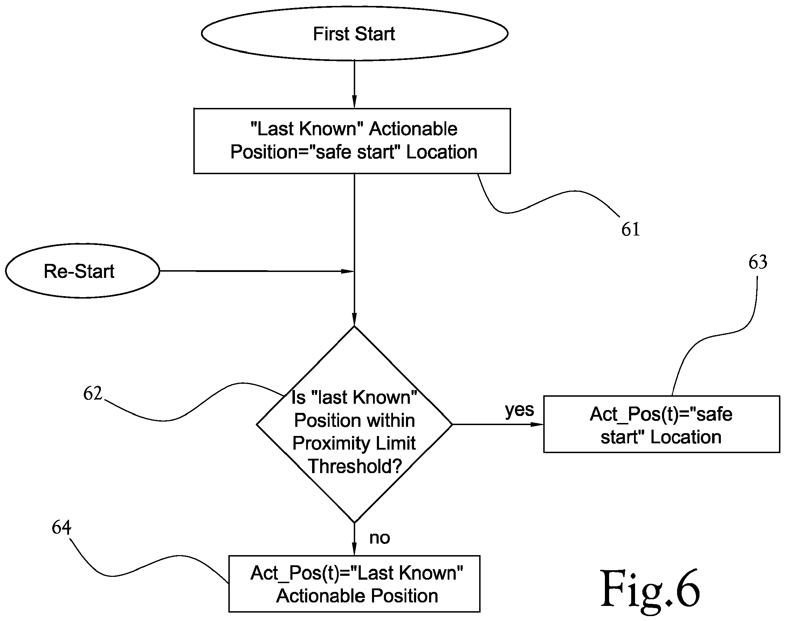

FIG. 6 is a flow chart illustrating the initialization of an actionable position according to an embodiment of the present general inventive concept. Upon first starting a navigation procedure using the mobile device 50, the safe start location is set as the last known actionable position in operation 61. If the mobile device 50 is undergoing a re-start due to the detected motion, or a reset, rather than a first start, then a last known actionable position is already stored.

In operation 62, it is determined whether the last known actionable position is located within the proximity limit threshold of the containment area. If the last known actionable position is determined to be located within the proximity limit threshold, the safe start location is set as the actionable position Act_Pos(t) in operation 63. If the last known actionable position is determined to not be within the proximity limit threshold, the last known actionable position is set as the actionable position Act_Pos(t) in operation 64.

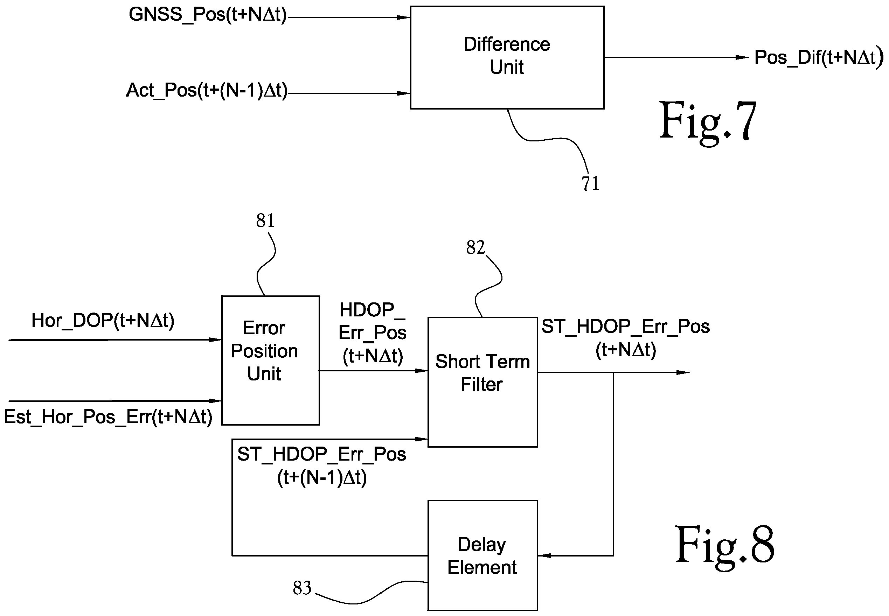

FIG. 7 illustrates the computation of a position difference Pos_Dif(t+NΔt) between a current GNSS position GNSS_Pos(t+NΔt) and the prior actionable position Act_Pos(t+(N-1)Δt) according to an embodiment of the present general inventive concept. The position difference Pos_Dif(t+NΔt), computed in the difference unit 71, may be used as described in a later operation.

FIG. 8 illustrates the computation of a short term GNSS solution metric based on HDOP and an estimated horizontal position error according to an embodiment of the present general inventive concept. This computation may be performed in the actionable position & speed determination unit 53 of the mobile device 50. As indicated in FIG. 8, the horizontal dilution of precision (HDOP) Hor_DOP(t+NΔt) and the estimated horizontal position error Est_Hor_Pos_Err(t+NΔt) are entered into an error position unit 81 to generate an HDOP error position HDOP_Err_Pos(t+NΔt). A short term filter 82 receives the HDOP error position HDOP_Err_Pos(t+NΔt), as well as a delayed short term HDOP error position ST_HDOP_Err_Pos(t+(N-1)Δt) that is fed back from a delay element 84, to generate and output a short term HDOP error position ST_HDOP_Err_Pos(t+NΔt). The output short term HDOP error position ST_HDOP_Err_Pos(t+NΔt) is also received by the delay element 83, and used to generate the delayed short term HDOP error position ST_HDOP_Err_Pos(t+(N-1)Δt). The short term time constant may be on the order of 3*Δt.

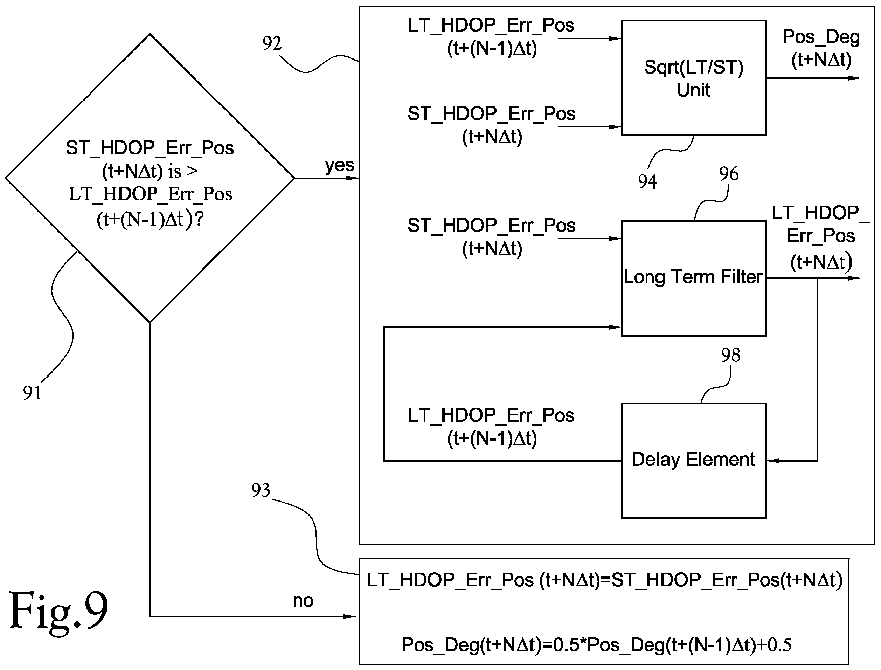

FIG. 9 is a flow chart illustrating the computation of an initial position degradation factor and a long term GNSS solution metric according to an embodiment of the present general inventive concept. In operation 91, it is determined whether the short term HDOP error position ST_HDOP_Err_Pos(t+NΔt) is greater than a delayed long term HDOP error position LT_HDOP_Err_Pos(t+(N-1)Δt). If the short term HDOP error position is greater than the delayed long term HDOP error position, then operation 92 is performed, in which the short term error position and the delayed long term HDOP error position are entered into a Sqrt(LT/ST) unit 94, which generates and outputs an initial position degradation factor Pos_Deg(t+NΔt). Also, the short term HDOP error position and the delayed long term HDOP error position are received by a long term filter 96, which generates a long term HDOP error position LT_HDOP_Err_Pos(t+NΔt). The long term HDOP error position is also fed back into a delay element 98, which generates the delayed long term HDOP error position LT_HDOP_Err_Pos(t+(N-1)Δt) and transmits same to the long term filter 96. The long term time constant may be on the order of 20*Δt.

If the short term HDOP error position is not greater than the delayed long term HDOP error position, then the long term HDOP error position LT_HDOP_Err_Pos(t+NΔt) is set to be equal to the short term HDOP error position, and the position degradation factor Pos_Deg(t+NΔt) is set to be equal to 0.5*Pos_Deg(t+(N-1)Δt)+0.5, wherein Pos_Deg(t+(N-1)Δt) is a delayed or last position degradation factor, in operation 93.

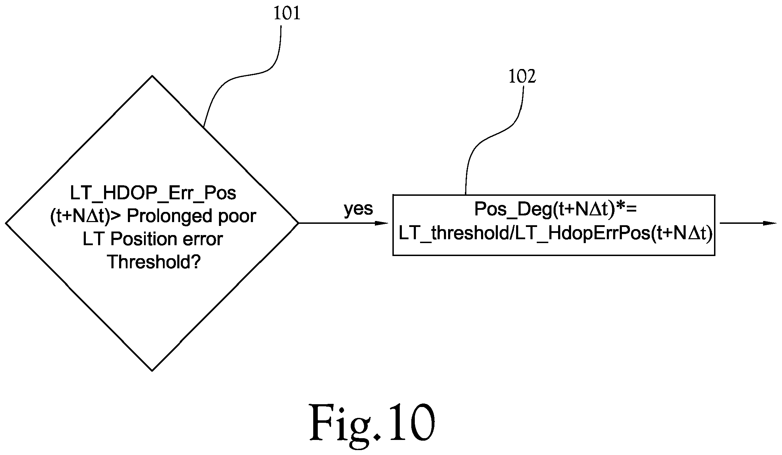

FIG. 10 is a flow chart illustrating the computation of a further position degradation factor based on a long term solution metric and a constant indicative of a prolonged poor long term position error threshold according to an embodiment of the present general inventive concept. In operation 101 it is determined whether the long term HDOP error position LT_HDOP_Err_Pos(t+NΔt) is greater than a constant LT_threshold that is indicative of a prolonged poor long term position error threshold. If the long term HDOP error position is greater than LT_threshold, then the further position degradation factor Pos_Deg(t+NΔt) is multiplied by the LT-threshold divided by the long term HDOP error position in operation 102.

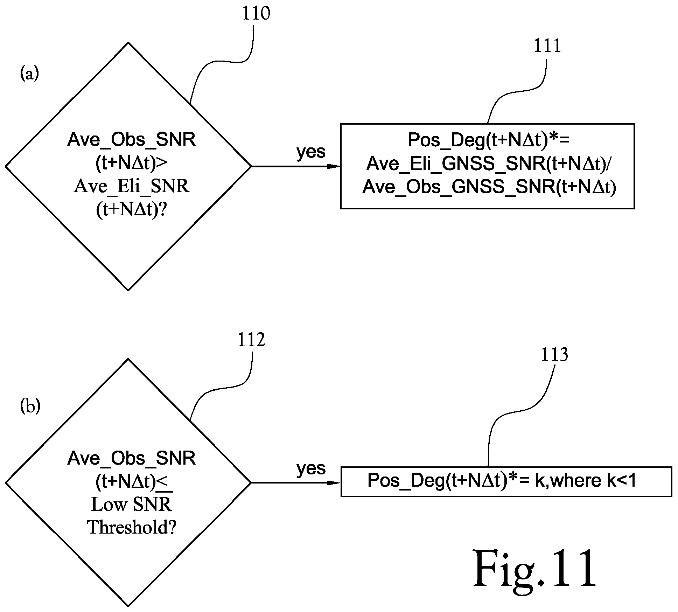

FIG. 11 is a flow chart illustrating the computation of a further position degradation factor based on GNSS signal metrics according to an embodiment of the present general inventive concept. In operation 110 it is determined whether an average observable signal to noise ratio Ave_Obs_SNR(t+NΔt), which is a quantity representative of the aggregate observable (all used GNSS signals) GNSS signal to noise ratio, is greater than an average eligible signal to noise ratio Ave-Eli_SNR(t+NΔt), which is a quantity representative of the aggregate eligible (all decodable GNSS signals emanating from satellites above a preset elevation threshold) GNSS signal to noise ratio. If the average observable signal to noise ratio is greater than the average eligible signal to noise ratio, the further position degradation factor Pos_Deg(t+NΔt) is multiplied by the average eligible signal to noise ratio divided by the average observable signal to noise ratio in operation 120.

It is also determined whether the average observable signal to noise ratio is less than or equal to a low SNR threshold in operation 112. If the average observable signal to noise ratio is less than or equal to the low SNR threshold, then the further position degradation factor Pos_Deg(t+NΔt) is multiplied by a constant k, where k is a constant and less than one, in operation 113.

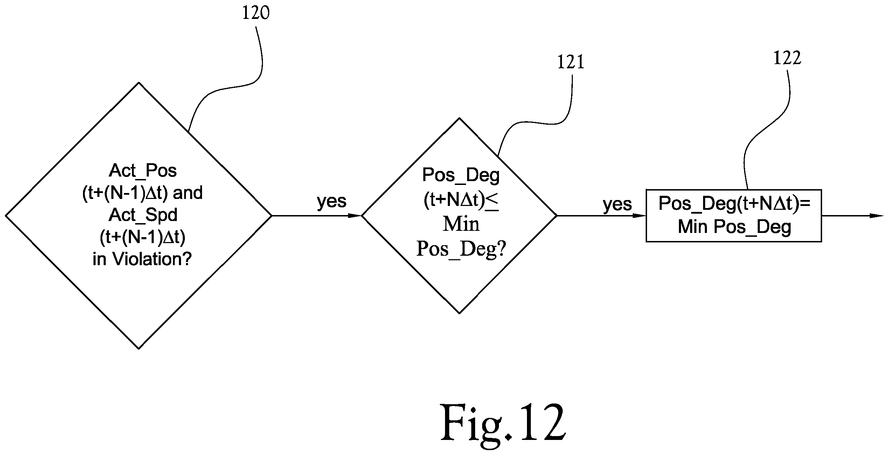

FIG. 12 is a flow chart illustrating the limiting of the position degradation factor according to an embodiment of the present general inventive concept. In operation 120, it is determined whether the last known actionable position Act_Pos(t+(N-1)Δt) and last known actionable speed Act_Spd(t+(N-1)Δt) resulted in a boundary violation. If it is determined that a boundary violation indeed occurred, it is determined whether the position degradation factor Pos_Deg(t+NΔt) is less than a minimum position degradation factor PosDegrade in operation 121. If the position degradation factor is less than the minimum position degradation factor, the position degradation factor is set to be equal to the minimum position degradation factor in operation 122.

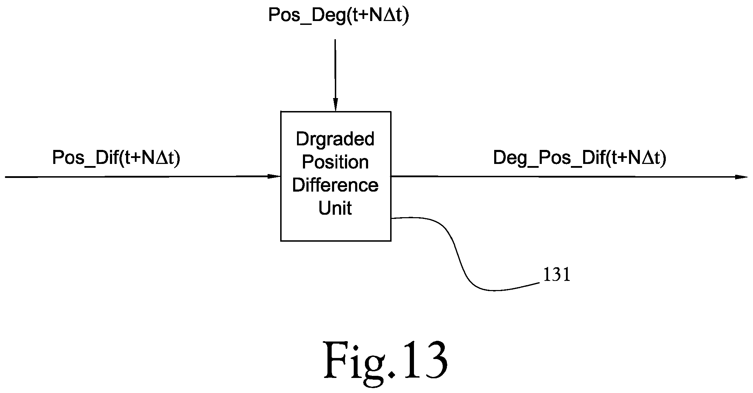

FIG. 13 illustrates the computation of a degraded position difference according to an embodiment of the present general inventive concept. Both the position difference Pos_Dif(t+NΔt) and the position degradation factor Pos_Deg(t+NΔt) are received by a degraded position difference unit 131, which then generates and outputs a degraded position difference Deg_Pos_Dif(t+NΔt).

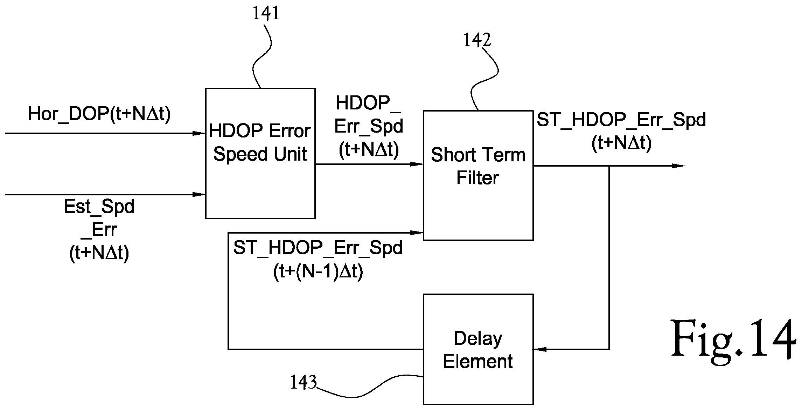

FIG. 14 illustrates the computation of a short term GNSS solution metric based on HDOP and an estimated speed error according to an embodiment of the present general inventive concept. This computation may be performed in the actionable position & speed determination unit 53 of the mobile device 50. As indicated in FIG. 14, the horizontal dilution of precision (HDOP) Hor_DOP(t+NΔt) and the estimated speed error Est_Spd_Err(t+NΔt) are entered into an HDOP error speed unit 141 to generate an HDOP error speed HDOP Err_Spd(t+NΔt). A short term filter 142 receives the HDOP error speed HDOP_Err_Spd(t+NΔt), as well as a delayed short term HDOP error speed ST_HDOP_Err_Spd(t+(N-1)Δt) that is fed back from a delay element 143, to generate and output a short term HDOP error speed ST_HDOP_Err_Spd(t+NΔt). The output short term HDOP error speed ST_HDOP_Err_Spd(t+NΔt) is also received by the delay element 143, and used to generate the delayed short term HDOP error position ST_HDOP_Err_Spd(t+(N-1)Δt). The short term time constant may be on the order of 3*Δt.

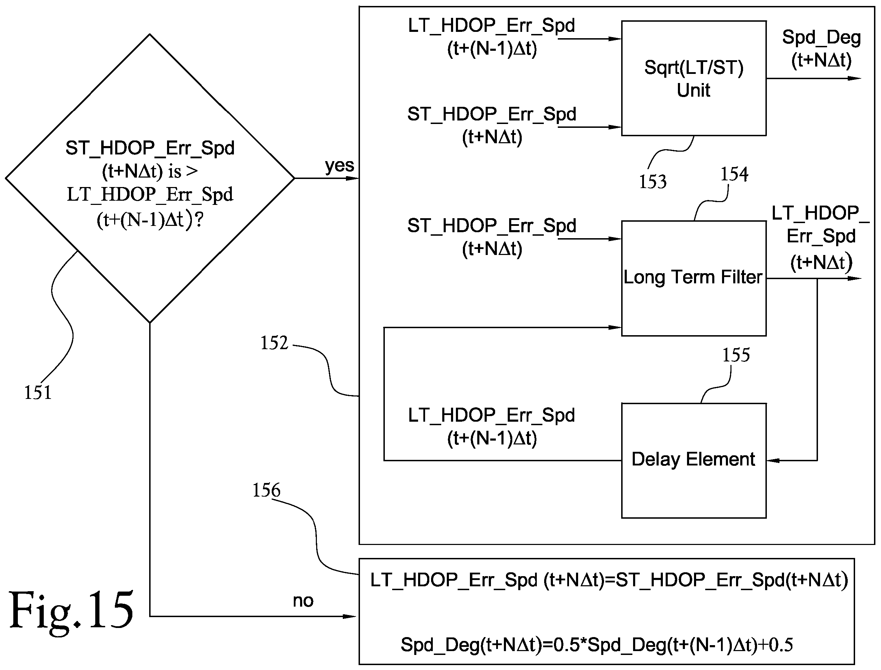

FIG. 15 is a flow chart illustrating the computation of an initial speed degradation factor and a long term GNSS solution metric based on HDOP and an estimated speed error according to an embodiment of the present general inventive concept. In operation 151, it is determined whether the short term HDOP error speed ST_HDOP_Err_Spd(t+NΔt) is greater than a delayed long term HDOP error speed LT_HDOP_Err_Spd(t+(N-1)Δt). If the short term HDOP error speed is greater than the delayed long term HDOP error speed, then operation 152 is performed, in which the short term error speed and the delayed long term HDOP error speed are entered into a Sqrt(LT/ST) unit 153, which generates and outputs a speed degradation factor Spd_Deg(t+NΔt). Also, the short term HDOP error speed and the delayed long term HDOP error speed are received by a long term filter 154, which generates a long term HDOP error speed LT_HDOP_Err_Spd(t+NΔt). The long term HDOP error position is also fed back into a delay element 155, which generates the delayed long term HDOP error speed LT_HDOP_Err_Spd(t+(N-1)Δt) and transmits same to the long term filter 154. The long term time constant may be on the order of 20*Δt.

If the short term HDOP error speed is not greater than the delayed long term HDOP error speed, then the long term HDOP error speed LT_HDOP_Err_Spd(t+NΔt) is set to be equal to the short term HDOP error speed, and the speed degradation factor Spd_Deg(t+NΔt) is set to be equal to 0.5*Spd_Deg(t+(N-1)Δt)+0.5, wherein Spd_Deg(t+(N-1)Δt) is a delayed or last speed degradation factor, in operation 156.

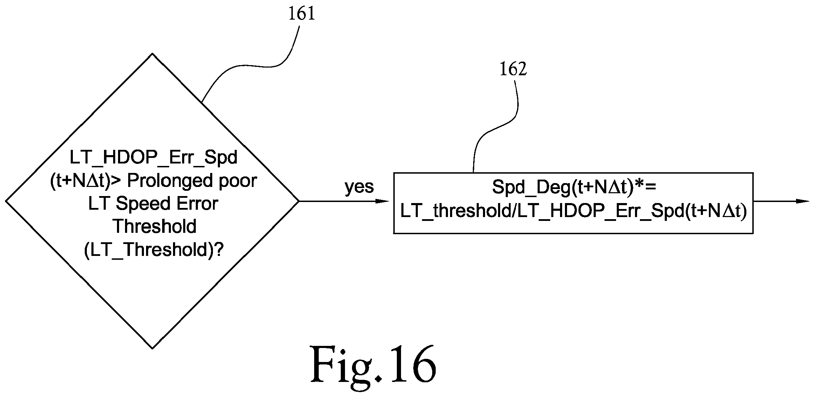

FIG. 16 is a flow chart illustrating the computation of a further speed degradation factor based on a long term solution metric and a constant indicative of a prolonged poor long term speed error threshold according to an embodiment of the present general inventive concept. In operation 161 it is determined whether the long term HDOP error speed LT_HDOP_Err_Spd(t+NΔt) is greater than a constant LT_threshold that is indicative of a prolonged poor long term speed error threshold. If the long term HDOP error speed is greater than LT_threshold, then the further speed degradation factor Spd_Deg(t+NΔt) is multiplied by the LT-threshold divided by the long term HDOP speed position in operation 162.

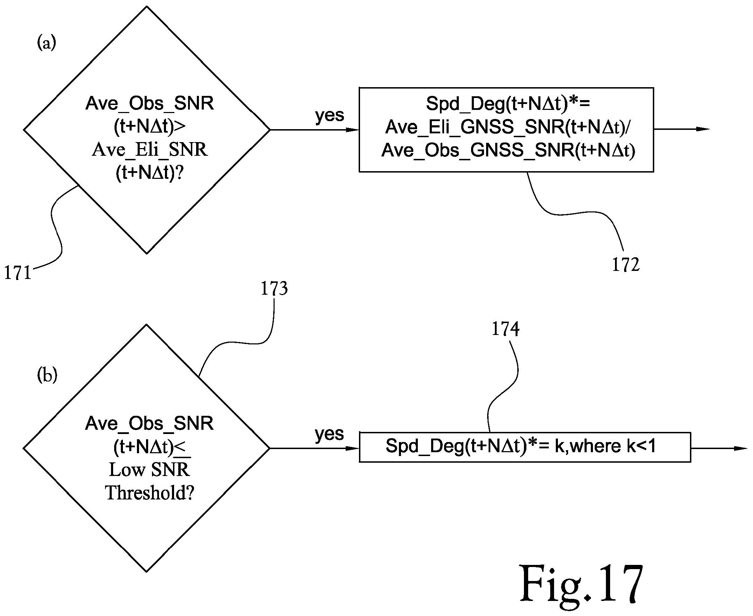

FIG. 17 is a flow chart illustrating the computation of a further speed degradation factor based on GNSS signal metrics according to an embodiment of the present general inventive concept. In operation 171 it is determined whether the average observable signal to noise ratio Ave_Obs_SNR((t+NΔt), which is a quantity representative of the aggregate observable (all decodable GNSS signals) GNSS signal to noise ratio, is greater than the average eligible signal to noise ratio Ave-Eli_SNR(t+NΔt), which is a quantity representative of the aggregate eligible (all GNSS signals emanating from satellites above a preset elevation threshold) GNSS signal to noise ratio. If the average observable signal to noise ratio is greater than the average eligible signal to noise ratio, the further speed degradation factor Spd_Deg(t+NΔt) is multiplied by the average eligible signal to noise ratio divided by the average observable signal to noise ratio in operation 172.

It is also determined whether the average observable signal to noise ratio is less than or equal to the low SNR threshold in operation 173. If the average observable signal to noise ratio is less than or equal to the low SNR threshold, then the further speed degradation factor Spd_Deg(t+NΔt) is multiplied by k, where k is a constant and less than one, in operation 174.

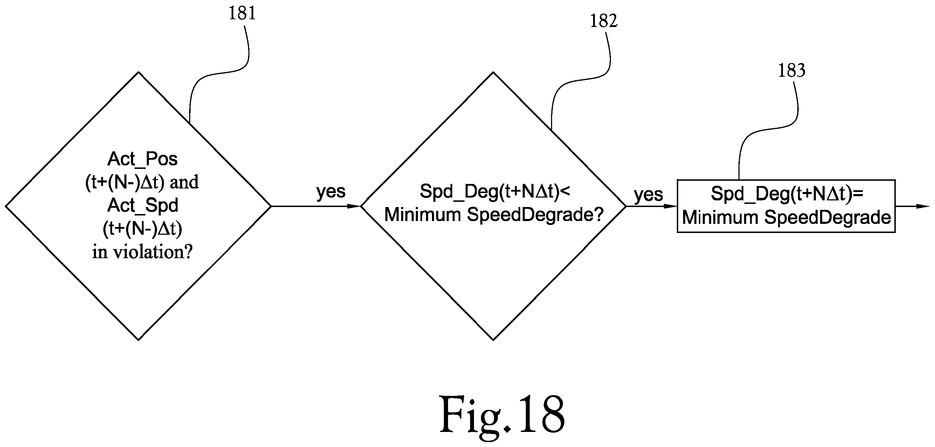

FIG. 18 is a flow chart illustrating the limiting of the speed degradation factor according to an embodiment of the present general inventive concept. In operation 181, it is determined whether the last known actionable position Act_Pos(t+(N-1)Δt) and last known actionable speed Act_Spd(t+(N-1)Δt) resulted in a boundary violation. If it is determined that a boundary violation indeed occurred, it is determined whether the speed degradation factor Spd_Deg(t+NΔt) is less than a minimum speed degradation factor SpeedDegrade in operation 182. If the speed degradation factor is less than the minimum speed degradation factor, the speed degradation factor is set to be equal to the minimum position degradation factor in operation 183.

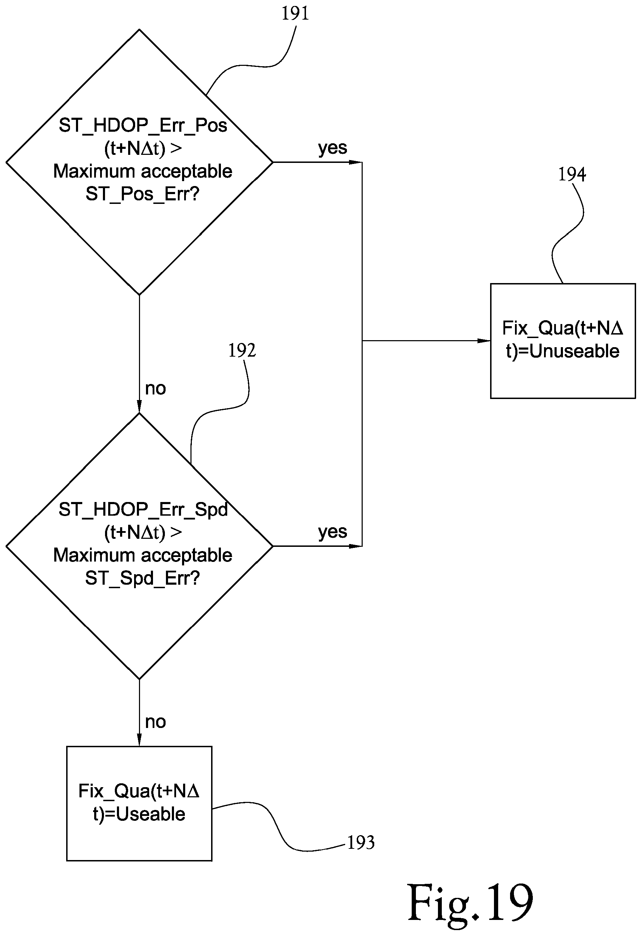

FIG. 19 is a flow chart illustrating a determination of the GNSS position and speed being useable or unuseable based on the short term GNSS solution metrics according to an embodiment of the present general inventive concept. In operation 191, it is determined whether the short term HDOP error position ST_HDOP_Err_Pos(t+NΔt) is greater than the maximum acceptable short term position error ST_Pos_Err. If the short term HDOP error position is not greater than the maximum acceptable short term position error, it is then determined whether the short term HDOP error speed ST_HDOP_Err_Spd(t+NΔt) is greater than the maximum acceptable short term speed error ST_Spd_Err in operation 192. If the short term HDOP error speed is not greater than the maximum acceptable short term speed error, then the GNSS position and speed, or fix, is determined to be useable. This is indicated in operation 193, in which the fix quality FixQuality(t+NΔt) is set as useable.

If the short term HDOP error position is greater than the maximum acceptable short term position error, or if the short term HDOP error speed is greater than the maximum acceptable short term speed error, then the fix quality is determined to be unuseable in operation 194.

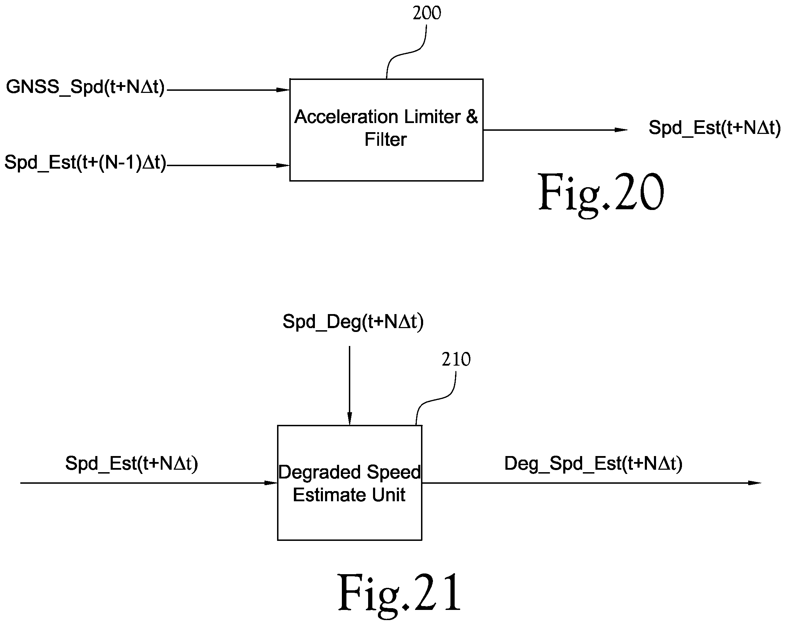

FIG. 20 illustrates the computation of a speed estimate based on mobile subject attributes according to an embodiment of the present general inventive concept. As illustrated, the GNSS speed GNSS_Spd(t+NΔt) and a delayed speed estimate Spd_Est(t+(N-1)Δt) are received by an acceleration limiter & filter 200, which then generates the speed estimate Spd_Est(t+NΔt) according to the attributes of the mobile subject. These attributes may be entered into the mobile device 50 by a user. The attributes may include information regarding, for example, known physical capabilities, the type of mobile subject (e.g., dog, cow, human, etc.), and so on.

FIG. 21 illustrates the computation of a degraded speed estimate according to an embodiment of the present general inventive concept. As illustrated, a speed degradation factor Spd_Deg(t+NΔt) and the speed estimate Spd_Est(t+NΔt) are received by a degraded speed estimate unit 210, which generates the degraded speed estimate Deg_Spd_Est(t+NΔt) accordingly.

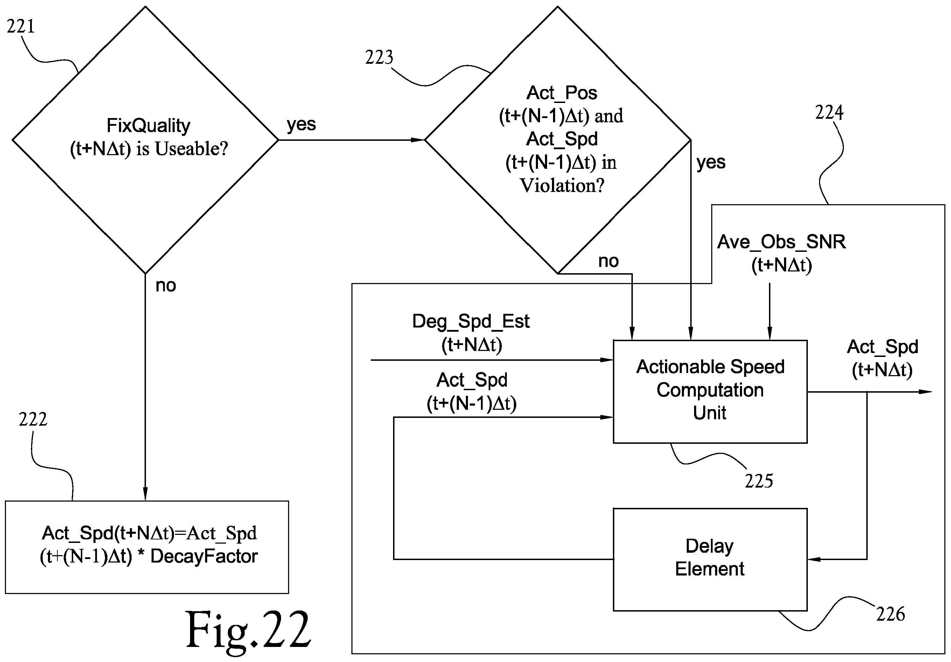

FIG. 22 is a flow chart illustrating the computation of an actionable speed based on a GNSS fix quality according to an embodiment of the present general inventive concept. In operation 221 it is determined whether the value of the fix quality FixQuality(t+NΔt) is useable. If the fix quality is not useable, the actionable speed is caused to decay towards zero as indicated in operation 222, in which the actionable speed Act_Spd(t+NΔt) is set to be equal to the delayed actionable speed Act_Spd(t+(N-1)Δt) multiplied by a decay factor. If the fix quality is useable, in operation 223 it is determined whether the delayed actionable position Act_Pos(t+(N-1)Δt) and delayed actionable speed Act_Spd(t+(N-1)Δt) are in a boundary violation. As illustrated, the average observable signal to noise ratio Ave_Obs_SNR(t+NΔt), degraded speed estimate Deg_Spd_Est(t+NΔt), delayed actionable speed Act_Spd(t+(N-1)Δt), and knowledge of whether the last actionable position and speed resulted in a boundary violation are input to an actionable speed computation unit 225, which generates the actionable speed Act_Spd(t+NΔt). Also, the actionable speed output by the actionable speed computation unit 225 is also fed back to a delay element 226 which generates the delayed actionable speed Act_Spd(t+(N-1)Δt).

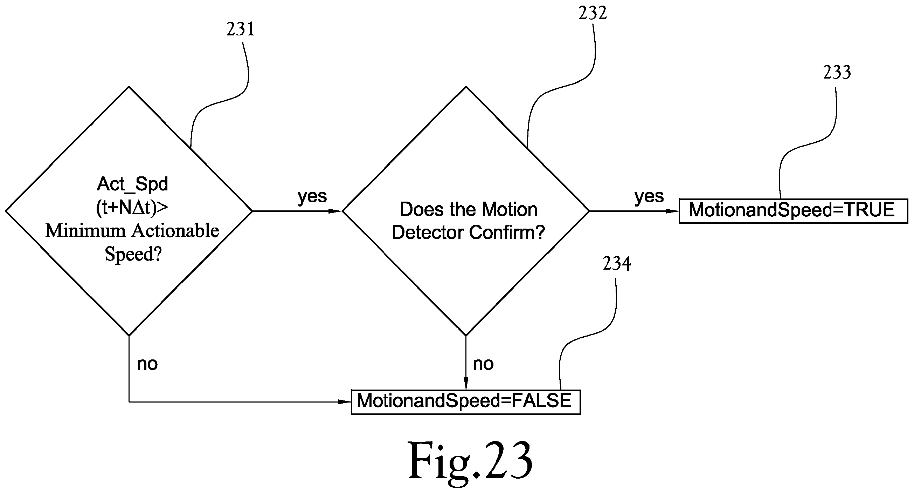

FIG. 23 is a flow chart illustrating a testing of the actionable speed against a minimum actionable speed constant and motion detector results according to an embodiment of the present general inventive concept. In operation 231 it is determined whether the actionable speed Act_Spd(t+NΔt) is greater than a minimum actionable speed constant. If the actionable speed is determined to be greater than the constant, in operation 232 it is determined whether the independent motion detector confirms movement of the mobile device. If it is determined that there is no movement confirmed by the independent motion detector, then it is determined that there is no actual motion and speed of the mobile device in operation 234, and a MotionandSpeed value is set to false. If it is determined that there is movement confirmed by the independent motion detector, then the MotionandSpeed value is set to true in operation 233. If the Act_Spd(t+NΔt) is determined to be less than the minimum actionable speed in operation 231, the MotionandSpeed value is set to false in operation 234.

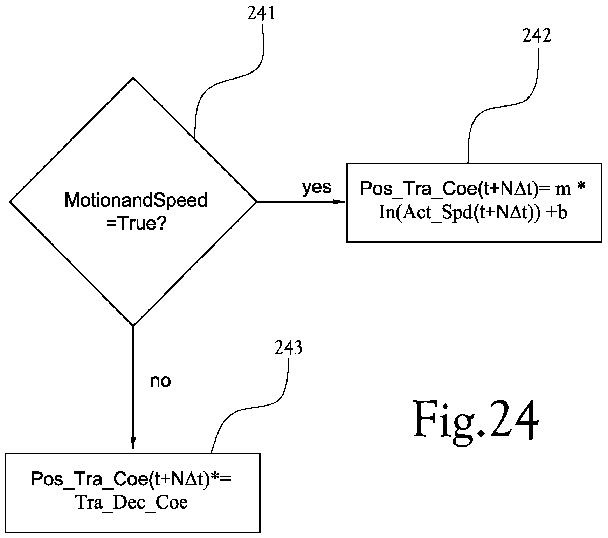

FIG. 24 is a flow chart illustrating the computation of a new position track coefficient based on the actionable speed according to an embodiment of the present general inventive concept. In operation 241, it is determined whether the MotionandSpeed value is set to true. In other words, it is determined whether both motion and speed are present for the mobile device. If the MotionandSpeed value is true, a new position track coefficient Pos_Tra_Coe(t+NΔt) is set to be equal to m multiplied by the natural log of the actionable speed Act_Spd(t+NΔt), plus b, in operation 242. The variables m and b are set according to the attributes of the subject. In this embodiment of the present general inventive concept the position track coefficient Pos_Tra_Coe(t+NΔt) is linear to the natural log of the actionable speed Act_Spd(t+NΔt). If the MotionandSpeed value is not true, then the position track coefficient is allowed to decay in operation 243, in which the position track coefficient is multiplied by a track coefficient decay value.

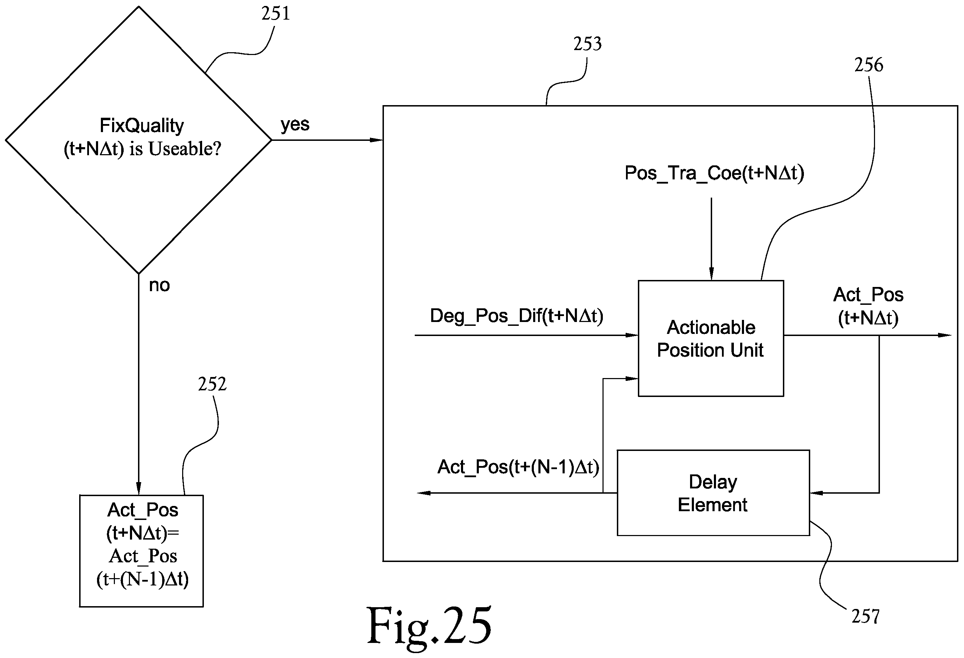

FIG. 25 is a flow chart illustrating the computation of a new actionable position based on a fix quality being useable according to an embodiment of the present general inventive concept. In operation 251, it is determined whether the fix quality has been set to useable. If it is determined that the fix quality has not been set to useable, then the actionable position Act_Pos(t+NΔt) is set to be equal to the delayed actionable position Act_Pos(t+(N-1)Δt) in operation 252. If it is determined that the fix quality has been set to useable, then the actionable position is newly set in operation 253. In operation 253, the position track coefficient Pos_Tra_Coe(t+NΔt), a degradation position difference Deg_Pos_Dif(t+NΔt), and the delayed actionable position Act_Pos(t+(N-1)Δt) are input to an actionable position unit 256 to generate the actionable position Act_Pos(t+NΔt), which is fed back into a delay element 257 to generate the delayed actionable position Act_Pos(t+(N-1)Δt).

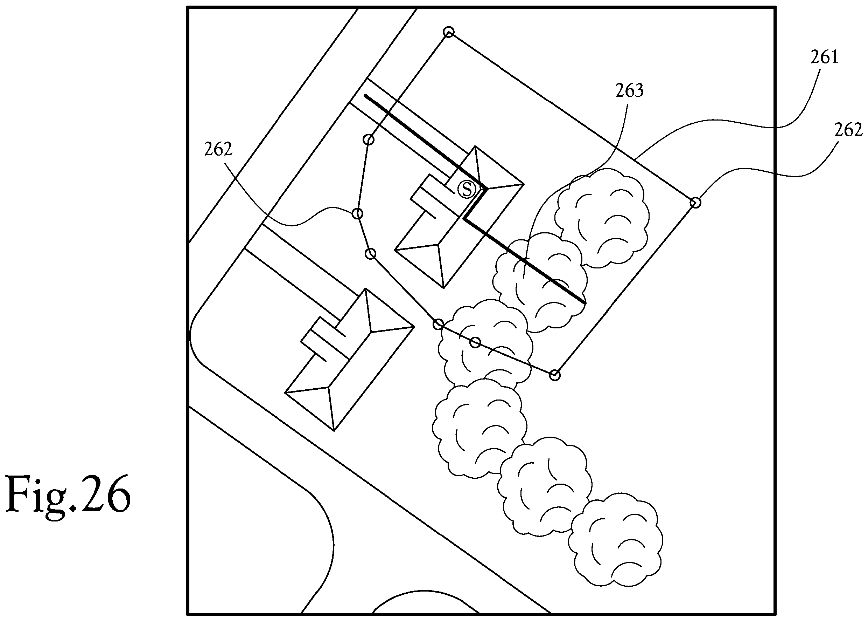

FIGS. 26-28 illustrate the results of an experimental tracking and boundary violation test using one embodiment of the present general inventive concept compared to using only GNSS signals.

FIG. 26 illustrates an actual known path taken by a mobile device through a confinement area used in a GNSS fencing application. The fence is represented by a solid line 261 connecting variously spaced vertices 262 surrounding the illustrated home. A mobile device configured according to an embodiment of the present application was moved back and forth along the illustrated thick solid line 263 while recording both the GNSS and actionable positions, at the same time and under identical conditions. The test spanned approximately five minutes, recording over 400 of both the GNSS and actionable positions. The circled S indicates the safe start location. During the test, the mobile device stopped and re-started navigation numerous times.

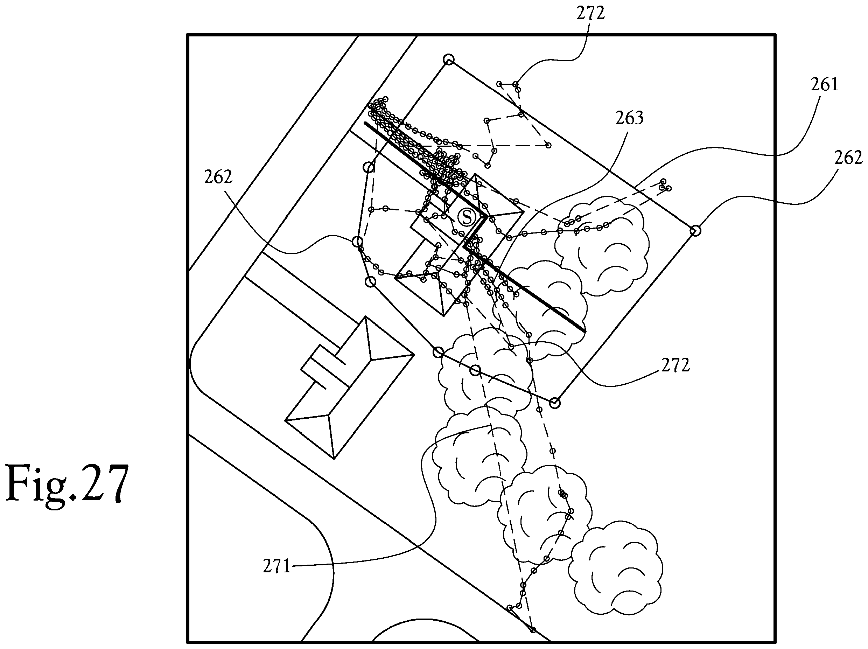

FIG. 27 illustrates the GNSS positions captured by the movement of the mobile device along the path illustrated in FIG. 26. The GNSS positions are illustrated as small circles 272, consecutive ones of which are joined by a thin dashed line 271. For the sake of clarity, not all of the more than 400 captured positions are distinguishable, as many may be located on top of one another, but the general direction of the captured positions has been maintained. As indicated in FIG. 27, the GNSS position error increases dramatically when the mobile device is inside the house. The boundary violations at the end of the driveway are real, but the boundary violations to the right and bottom of the fenced area are false.

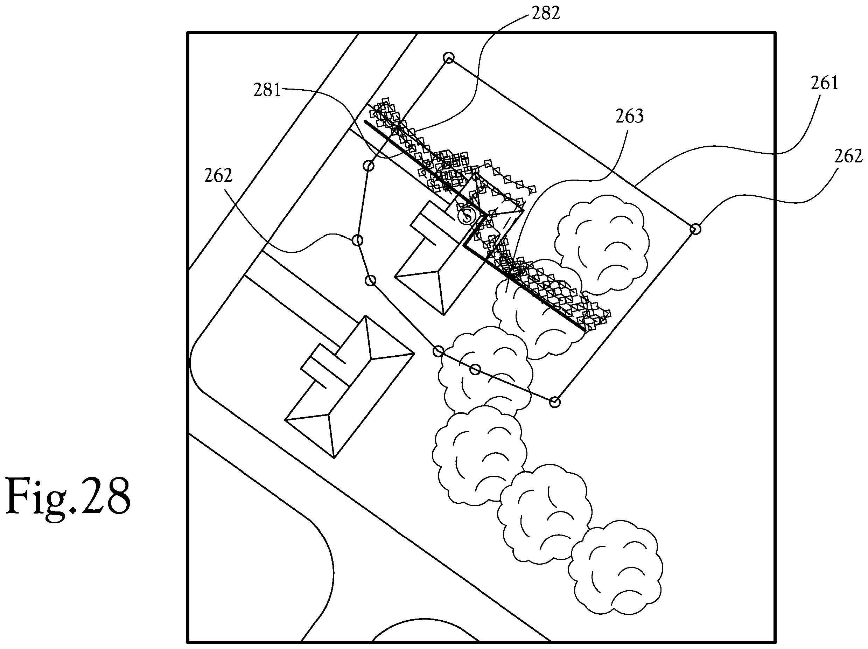

FIG. 28 illustrates the actionable positions captured by the movement of the mobile device along the path illustrated in FIG. 26. The actionable positions, which were recorded simultaneous to the GNSS positions illustrated in FIG. 27, are illustrated as small squares 282, consecutive ones of which are joined by a thin dashed line 281. For the sake of clarity, not all of the more than 400 captured positions are distinguishable, as many may be located on top of one another, but the general direction of the captured positions has been maintained. As indicated in FIG. 28, the path of the actionable positions shows minimal errors from the true path taken by the mobile device, and no false boundary violations have occurred.

According to various embodiments of the present general inventive concept, a mobile device used to track a mobile subject in order to contain the mobile subject in a bounded containment area may determine an actionable position and speed of the mobile subject which are more reliable than the conventionally derived GNSS position and speed. The actionable position and speed are quantities derived from the GNSS position and speed, confirmation of movement from an independent motion detector, and one or more additional values which may include GNSS signal metrics, GNSS solution metrics, prior actionable position and speed, or any combination thereof. The actionable position and speed may track the GNSS position and speed more closely under favorable signal conditions and with a confirmed modest speed. As GNSS signal conditions degrade or GNSS speed decreases, the actionable position and speed may track the GNSS position and speed less closely. If GNSS signal conditions or GNSS speed are below minimum acceptable levels, the actionable position and speed may cease tracking the GNSS position and speed altogether. Various embodiments of the present general inventive concept also conserve energy due to the employment of an independent motion detector which may indicate when the actionable position and speed need to be determined.

The concepts and techniques disclosed herein are not limited to any particular type of mobile object, and could be applied to various other applications and objects, without departing from the scope of the present general inventive concept. For example, although the description discusses a dog collar worn by a dog, the present general inventive concept is not limited to any particular type of animal, and further may be used by a human or mechanical mobile subject.

It is noted that the simplified diagrams and drawings do not illustrate all the various connections and assemblies of the various components, however, those skilled in the art will understand how to implement such connections and assemblies, based on the illustrated components, figures, and descriptions provided herein, using sound engineering judgment.

The present general inventive concept can be embodied as computer-readable codes on a computer-readable medium. The computer-readable medium can include a computer-readable recording medium and a computer-readable transmission medium. The computer-readable recording medium is any data storage device that can store data as a program which can be thereafter read by a computer system. Examples of the computer-readable recording medium include read-only memory (ROM), random-access memory (RAM), CD-ROMs, DVDs, magnetic tapes, floppy disks, and optical data storage devices. The computer-readable recording medium can also be distributed over network coupled computer systems so that the computer-readable code is stored and executed in a distributed fashion. The computer-readable transmission medium can transmit carrier waves or signals (e.g., wired or wireless data transmission through the Internet). Also, functional programs, codes, and code segments to accomplish the present general inventive concept can be easily construed by programmers skilled in the art to which the present general inventive concept pertains.

Numerous variations, modifications, and additional embodiments are possible, and accordingly, all such variations, modifications, and embodiments are to be regarded as being within the scope of the present general inventive concept. For example, regardless of the content of any portion of this application, unless clearly specified to the contrary, there is no requirement for the inclusion in any claim herein or of any application claiming priority hereto of any particular described or illustrated activity or element, any particular sequence of such activities, or any particular interrelationship of such elements. Moreover, any activity can be repeated, any activity can be performed by multiple entities, and/or any element can be duplicated.

While the present general inventive concept has been illustrated by description of several example embodiments, it is not the intention of the applicant to restrict or in any way limit the scope of the inventive concept to such descriptions and illustrations. Instead, the descriptions, drawings, and claims herein are to be regarded as illustrative in nature, and not as restrictive, and additional embodiments will readily appear to those skilled in the art upon reading the above description and drawings.

## Claims

1. An apparatus (50) to track a mobile subject based on Global Navigation Satellite Systems, GNSS, data, wherein the GNSS data comprises GNSS position, velocity, time, PVT, signals, wherein the apparatus (50) is configured to be attached to or worn by the mobile subject, the apparatus (50) comprising:
a motion detector (55) configured to detect motion of the mobile subject independently of the GNSS data;
a signal reception and corrections unit (51) configured to receive the GNSS data;
a PVT engine (52) configured to generate a GNSS position and GNSS speed from the received GNSS data;
an actionable position and speed determination unit (53) configured to determine an actionable position and speed of the mobile subject, wherein the actionable position and
speed are quantities derived from
the GNSS position and GNSS speed,
confirmation of movement of the apparatus (50) by detection results of the motion detector,
GNSS solution metrics, GNSS signal metrics, and a prior actionable position and speed,
wherein the GNSS solution metrics include an horizontal dilution of precision, estimated horizontal position error, estimated speed error, the horizontal dilution of precision times the estimated horizontal position error, the horizontal dilution of precision times the estimated speed error, or any combination thereof,
wherein the GNSS signal metrics include a quantity representative of the aggregate observable GNSS signal to noise ratio and/or a quantity representative of the aggregate eligible GNSS signal to noise ratio, observable indicating all GNSS signals used to determine the GNSS position and speed, and eligible indicating all decodable GNSS signals emanating from satellites above a predetermined elevation threshold,
wherein the prior actionable position and speed are maintained in response to the motion detector detecting no motion of the mobile subject,
such that the actionable position and speed tracks the GNSS position and GNSS
speed very closely under favorable GNSS signal conditions and GNSS speed, ceases tracking the GNSS position and speed if GNSS signal conditions and/or GNSS speed are below acceptable levels; and
a boundary test unit (58) configured to evaluate the actionable position and speed of the mobile subject relative to a predetermined boundary defining a containment area.

2. The apparatus of claim 1, wherein said motion detector is a micro electro-mechanical systems, MEMS, device or wherein said motion detector is an omnidirectional vibration sensor.

3. The apparatus of claim 1, wherein a predetermined location within the containment area is used as an initial start location of the mobile subject.

4. The apparatus of claim 1, wherein the GNSS data further comprises GNSS time signals, pseudo-range error data, time assist data and/or ephemeris assist data.

5. The apparatus of claim 1, wherein the mobile subject is a human or animal.

6. A method of tracking a mobile subject based on Global Navigation Satellite Systems, GNSS, data, wherein the GNSS data comprises GNSS position, velocity, time, PVT, signals, the method being performed by an apparatus (50) attached to or worn by the mobile subject, the method comprising:
detecting motion of the mobile subject independently of the GNSS data with a motion detector (55);
receiving the GNSS data with a signal reception and corrections unit (51);
generating a GNSS position and GNSS speed from the received GNSS data with a PVT engine (52);
determining an actionable position and speed of the mobile subject, with an actionable position and speed unit (53), wherein the actionable position and speed are quantities derived from
the GNSS position and GNSS speed,
confirmation of movement of the mobile subject by detection results of the motion detector, and
GNSS solution metrics, GNSS signal metrics, and a prior actionable position and speed,
wherein the GNSS solution metrics include an horizontal dilution of precision, estimated horizontal position error, estimated speed error, the horizontal dilution of precision times the estimated horizontal position error, the horizontal dilution of precision times the estimated speed error, or any combination thereof,
wherein the GNSS signal metrics include a quantity representative of the aggregate observable GNSS signal to noise ratio and/or a quantity representative of the aggregate eligible GNSS signal to noise ratio, observable indicating all GNSS signals used to determine the GNSS position and speed, and eligible indicating all decodable GNSS signals emanating from satellites above a predetermined elevation threshold,
wherein the prior actionable position and speed are maintained in response to detecting no motion of the mobile subject,
such that the actionable position and speed tracks the GNSS position and GNSS
speed very closely under favorable GNSS signal conditions and GNSS speed, ceases tracking the GNSS position and speed if GNSS signal conditions and/or GNSS speed are below acceptable levels; and evaluating, with a boundary test unit (58), the actionable position and speed of the mobile subject relative to a predetermined boundary defining a containment area.

7. The method of claim 6, wherein a predetermined location within the containment area is used as an initial start location of the mobile subject

8. The method of claim 6, wherein the GNSS data further comprises GNSS time signals, pseudo-range error data, time assist data and/or ephemeris assist data.

9. The method of claim 6, wherein the mobile subject is a human or animal.

10. A computer readable storage medium having recorded thereon a program to cause a computer to perform a method of tracking a mobile subject to detect a boundary violation based on Global Navigation Satellite Systems, GNSS, data, wherein the GNSS data comprises GNSS position, velocity, time, PVT, signals, the method being performed by the computer (50) attached to or worn by the mobile subject, the method comprising:
detecting motion of the mobile subject independently of the GNSS data with a motion detector (55);
receiving the GNSS data with a signal reception and corrections unit (51);
generating a GNSS position and GNSS speed from the received GNSS data with a PVT engine (52);
determining an actionable position and speed of the mobile subject, with an actionable position and speed unit (53), wherein the actionable position and speed are quantities derived from
the GNSS position and GNSS speed,
confirmation of movement of the mobile subject by detection results of the motion detector (55), and
GNSS solution metrics, GNSS signal metrics, and a prior actionable position and speed,
wherein the GNSS solution metrics include an horizontal dilution of precision, estimated horizontal position error, estimated speed error, the horizontal dilution of precision times the estimated horizontal position error, the horizontal dilution of precision times the estimated speed error, or any combination thereof, wherein the GNSS signal metrics include a quantity representative of the aggregate observable GNSS signal to noise ratio and/or a quantity representative of the aggregate eligible GNSS signal to noise ratio, observable indicating all GNSS signals used to determine the GNSS position and speed, and eligible indicating all decodable GNSS signals emanating from satellites above a predetermined elevation threshold,
wherein the prior actionable position and speed are maintained in response to detecting no motion of the mobile subject,
such that the actionable position and speed tracks the GNSS position and GNSS
speed very closely under favorable GNSS signal conditions and GNSS speed, ceases tracking the GNSS position and speed if GNSS signal conditions and/or GNSS speed are below acceptable levels; and evaluating, with a boundary test unit (58), the actionable position and speed of the mobile subject relative to a predetermined boundary defining a containment area.

## Patentansprüche

1. Gerät (50) zum Verfolgen eines mobilen Objektes auf der Grundlage von Daten des globalen Navigationssatellitensystems, GNSS, wobei die GNSS-Daten GNSS-Positions-, Geschwindigkeits- und Zeit- (PVT-) Signale umfassen, wobei das Gerät (50) dazu eingerichtet ist, an dem mobilen Objekt angebracht oder von diesem getragen werden zu können, wobei das Gerät (50) umfasst:
einen Bewegungsdetektor (55), der dazu eingerichtet ist, die Bewegung des mobilen Objektes unabhängig von den GNSS-Daten zu erfassen;
eine Signalempfangs- und -korrektureinheit (51), die zum Empfangen der GNSS-Daten eingerichtet ist;
eine PVT-Maschine (52), die dazu eingerichtet ist, eine GNSS-Position und eine GNSS-Geschwindigkeit aus den empfangenen GNSS-Daten zu erzeugen;
eine Einheit (53) zum Bestimmen einer verwertbaren Position und Geschwindigkeit, die dazu eingerichtet ist, eine verwertbare Position und Geschwindigkeit des mobilen Objektes zu bestimmen, wobei die verwertbare Position und Geschwindigkeit Größen sind, die abgeleitet werden von
der GNSS-Position und der GNSS-Geschwindigkeit,
der Bestätigung der Bewegung des Gerätes (50) durch die Erfassungsergebnisse des Bewegungsdetektors,
GNSS-Lösungsmetriken, GNSS-Signalmetriken und einer vorherigen verwertbaren Position und Geschwindigkeit,
wobei die GNSS-Lösungsmetriken eine horizontale Dilution of Precision, einen geschätzten horizontalen Positionsfehler, einen geschätzten Geschwindigkeitsfehler, die horizontale Dilution of Precision mal den geschätzten horizontalen Positionsfehler, die horizontale Dilution of Precision mal den geschätzten Geschwindigkeitsfehler oder eine beliebige Kombination davon umfassen,
wobei die GNSS-Signalmetriken eine Größe umfassen, die für das gesamte beobachtbare GNSS-Signal-Rausch-Verhältnis repräsentativ ist, und/oder eine Grö-βe umfassen, die für das gesamte zulässige GNSS-Signal-Rausch-Verhältnis, repräsentativ ist, die beobachtbar sämtliche GNSS-Signale anzeigen, die verwendet werden, um die GNSS-Position und -Geschwindigkeit zu bestimmen, und zulässig sämtliche decodierbaren GNSS-Signale anzeigen, die von Satelliten oberhalb eines vorbestimmten Höhenschwellenwertes ausgehen,
wobei die vorherige verwertbare Position und Geschwindigkeit als Reaktion darauf beibehalten werden, dass der Bewegungsdetektor keine Bewegung des mobilen Objektes erfasst,
so dass die verwertbare Position und Geschwindigkeit die GNSS-Position und GNSS-Geschwindigkeit unter günstigen GNSS-Signalbedingungen und GNSS-Geschwindigkeit sehr genau verfolgt und die Verfolgung der GNSS-Position und - Geschwindigkeit beendet, wenn die GNSS-Signalbedingungen und/oder die GNSS-Geschwindigkeit unter akzeptablen Werten liegen; und
eine Grenzprüfeinheit (58), die dazu eingerichtet ist, die verwertbare Position und Geschwindigkeit des mobilen Objektes relativ zu einer vorbestimmten Grenze, die einen Einschlussbereich definiert, auszuwerten.

2. Gerät nach Anspruch 1, bei dem der Bewegungsdetektor eine MEMS-Vorrichtung (MEMS - Mikroelektromechanisches System) ist oder der Bewegungsdetektor ein omnidirektionaler Vibrationssensor ist.

3. Gerät nach Anspruch 1, bei dem ein vorbestimmter Ort innerhalb des Einschlussbereichs als anfänglicher Startort des mobilen Objektes verwendet wird.

4. Gerät nach Anspruch 1, bei dem die GNSS-Daten weiterhin GNSS-Zeitsignale, Pseudo-Entfernungsfehlerdaten, Zeithilfsdaten und/oder Ephemeridenhilfsdaten umfassen.

5. Gerät nach Anspruch 1, bei dem das mobile Objekt ein Mensch oder ein Tier ist.

6. Verfahren zum Verfolgen eines mobilen Objektes auf der Grundlage von Daten des globalen Navigationssatellitensystems, GNSS, wobei die GNSS-Daten GNSS-Positions-, Geschwindigkeits- und Zeit- (PVT-) Signale umfassen, das Verfahren durch ein Gerät (50) ausgeführt wird, das an dem mobilen Objekt angebracht ist oder von diesem getragen wird, und das Verfahren umfasst:
Erfassen der Bewegung des mobilen Objektes unabhängig von den GNSS-Daten mit einem Bewegungsdetektor (55);
Empfangen der GNSS-Daten mit einer Signalempfangs- und -korrektureinheit (51);
Erzeugen einer GNSS-Position und einer GNSS-Geschwindigkeit aus den empfangenen GNSS-Daten mit einer PVT-Maschine (52);
Bestimmen einer verwertbare Position und Geschwindigkeit des mobilen Objektes mit einer Einheit (53) für verwertbare Position und Geschwindigkeit, wobei die verwertbare Position und Geschwindigkeit Größen sind, die abgeleitet werden von
der GNSS-Position und der GNSS-Geschwindigkeit,
der Bestätigung der Bewegung des mobilen Objektes durch die Erfassungsergebnisse des Bewegungsdetektors,
GNSS-Lösungsmetriken, GNSS-Signalmetriken und einer vorherigen verwertbaren Position und Geschwindigkeit,
wobei die GNSS-Lösungsmetriken eine horizontale Dilution of Precision, einen geschätzten horizontalen Positionsfehler, einen geschätzten Geschwindigkeitsfehler, die horizontale Dilution of Precision mal den geschätzten horizontalen Positionsfehler, die horizontale Dilution of Precision mal den geschätzten Geschwindigkeitsfehler oder eine beliebige Kombination davon umfassen,
wobei die GNSS-Signalmetriken eine Größe umfassen, die für das gesamte beobachtbare GNSS-Signal-Rausch-Verhältnis repräsentativ ist, und/oder eine Grö-βe umfassen, die für das gesamte zulässige GNSS-Signal-Rausch-Verhältnis, repräsentativ ist, die beobachtbar sämtliche GNSS-Signale anzeigen, die verwendet werden, um die GNSS-Position und -Geschwindigkeit zu bestimmen, und zulässig sämtliche decodierbaren GNSS-Signale anzeigen, die von Satelliten oberhalb eines vorbestimmten Höhenschwellenwertes ausgehen,
wobei die vorherige verwertbare Position und Geschwindigkeit als Reaktion darauf beibehalten werden, dass der Bewegungsdetektor keine Bewegung des mobilen Objektes erfasst,
so dass die verwertbare Position und Geschwindigkeit die GNSS-Position und GNSS-Geschwindigkeit unter günstigen GNSS-Signalbedingungen und GNSS-Geschwindigkeit sehr genau verfolgt und die Verfolgung der GNSS-Position und - Geschwindigkeit beendet, wenn die GNSS-Signalbedingungen und/oder die GNSS-Geschwindigkeit unter akzeptablen Werten liegen; und
Auswerten, mit einer Grenzprüfeinheit (58), der verwertbaren Position und Geschwindigkeit des mobilen Objektes relativ zu einer vorbestimmten Grenze, die einen Einschlussbereich definiert.

7. Verfahren nach Anspruch 6, bei dem ein vorbestimmter Ort innerhalb des Einschlussbereichs als anfänglicher Startort des mobilen Objektes verwendet wird.

8. Verfahren nach Anspruch 6, bei dem die GNSS-Daten weiterhin GNSS-Zeitsignale, Pseudo-Entfernungsfehlerdaten, Zeithilfsdaten und/oder Ephemeridenhilfsdaten umfassen.

9. Verfahren nach Anspruch 6, bei dem das mobile Objekt ein Mensch oder ein Tier ist.

10. Computerlesbares Speichermedium, auf dem ein Programm aufgezeichnet ist, um einen Computer zu veranlassen, ein Verfahren zum Verfolgen eines mobilen Objektes, um eine Grenzverletzung zu erfassen, auf der Grundlage von Daten des globalen Navigationssatellitensystems, GNSS, auszuführen, wobei die GNSS-Daten GNSS-Positions-, Geschwindigkeits- und Zeit- (PVT-) Signale umfassen, das Verfahren durch den Computer (50) ausgeführt wird, der an dem mobilen Objekt angebracht ist oder von diesem getragen wird, und das Verfahren umfasst:
Erfassen der Bewegung des mobilen Objektes unabhängig von den GNSS-Daten mit einem Bewegungsdetektor (55);
Empfangen der GNSS-Daten mit einer Signalempfangs- und -korrektureinheit (51);
Erzeugen einer GNSS-Position und einer GNSS-Geschwindigkeit aus den empfangenen GNSS-Daten mit einer PVT-Maschine (52);
Bestimmen einer verwertbaren Position und Geschwindigkeit des mobilen Objektes mit einer Einheit (53) für verwertbare Position und Geschwindigkeit, wobei die verwertbare Position und Geschwindigkeit Größen sind, die abgeleitet werden von
der GNSS-Position und der GNSS-Geschwindigkeit,
der Bestätigung der Bewegung des mobilen Objektes durch die Erfassungsergebnisse des Bewegungsdetektors (55),
GNSS-Lösungsmetriken, GNSS-Signalmetriken und einer vorherigen verwertbaren Position und Geschwindigkeit,
wobei die GNSS-Lösungsmetriken eine horizontale Dilution of Precision, einen geschätzten horizontalen Positionsfehler, einen geschätzten Geschwindigkeitsfehler, die horizontale Dilution of Precision mal den geschätzten horizontalen Positionsfehler, die horizontale Dilution of Precision mal den geschätzten Geschwindigkeitsfehler oder eine beliebige Kombination davon umfassen,
wobei die GNSS-Signalmetriken eine Größe umfassen, die für das gesamte beobachtbare GNSS-Signal-Rausch-Verhältnis repräsentativ ist, und/oder eine Grö-βe umfassen, die für das gesamte zulässige GNSS-Signal-Rausch-Verhältnis, repräsentativ ist, die beobachtbar sämtliche GNSS-Signale anzeigen, die verwendet werden, um die GNSS-Position und -Geschwindigkeit zu bestimmen, und zulässig sämtliche decodierbaren GNSS-Signale anzeigen, die von Satelliten oberhalb eines vorbestimmten Höhenschwellenwertes ausgehen,
wobei die vorherige verwertbare Position und Geschwindigkeit als Reaktion darauf beibehalten werden, dass keine Bewegung des mobilen Objektes erfasst wird,
so dass die verwertbare Position und Geschwindigkeit die GNSS-Position und GNSS-Geschwindigkeit unter günstigen GNSS-Signalbedingungen und GNSS-Geschwindigkeit sehr genau verfolgt und die Verfolgung der GNSS-Position und - Geschwindigkeit beendet, wenn die GNSS-Signalbedingungen und/oder die GNSS-Geschwindigkeit unter akzeptablen Werten liegen; und
Auswerten, mit einer Grenzprüfeinheit (58), der verwertbaren Position und Geschwindigkeit des mobilen Objektes relativ zu einer vorbestimmten Grenze, die einen Einschlussbereich definiert.

## Revendications

1. Appareil (50) pour suivre un sujet mobile sur la base de données de Systèmes de Localisation et de Navigation par Satellites, GNSS, dans lequel les données GNSS comprennent des signaux de position, vitesse, temps, PVT, GNSS, dans lequel l'appareil (50) est configuré pour être attaché au sujet mobile, ou porté par celui-ci, l'appareil (50) comprenant :
un détecteur de mouvement (55) configuré pour détecter un mouvement du sujet mobile indépendamment des données GNSS ;
une unité de réception et de corrections de signal (51) configurée pour recevoir les données GNSS ;
un moteur PVT (52) configuré pour générer une position GNSS et une vitesse GNSS à partir des données GNSS reçues ;
une unité de détermination de position et de vitesse exploitables (53) configurée pour déterminer une position et une vitesse exploitables du sujet mobile, la position et la vitesse exploitables étant des quantités dérivées de
la position GNSS et la vitesse GNSS,
la confirmation de mouvement de l'appareil (50) par des résultats de détection du détecteur de mouvement,
des métriques de solution GNSS, des métriques de signal GNSS, et une position et une vitesse exploitables antérieures,
dans lequel les métriques de solution GNSS comprennent une dilution horizontale de précision, une erreur de position horizontale estimée, une erreur de vitesse estimée, la dilution horizontale de précision multipliée par l'erreur de position horizontale estimée, la dilution horizontale de précision multipliée par l'erreur de vitesse estimée, ou toute combinaison de celles-ci,
dans lequel les métriques de signal GNSS comprennent une quantité représentative du rapport signal sur bruit GNSS observable agrégé et/ou une quantité représentative du rapport signal sur bruit GNSS éligible agrégé, le terme observable signifiant tous les signaux GNSS utilisés pour déterminer la position et la vitesse GNSS, et le terme éligible signifiant tous les signaux GNSS décodables émanant de satellites au-dessus d'un seuil d'élévation prédéterminé,
dans lequel la position et la vitesse exploitables antérieures sont maintenues en réponse au fait que le détecteur de mouvement ne détecte aucun mouvement du sujet mobile,
de sorte que la position et la vitesse exploitables suivent la position GNSS et la vitesse GNSS très étroitement sous des conditions de signal GNSS et vitesse GNSS favorables, cessent de suivre la position et la vitesse GNSS si les conditions de signal GNSS et/ou la vitesse GNSS sont inférieures à des niveaux acceptables ; et
une unité de test de frontière (58) configurée pour évaluer la position et la vitesse exploitables du sujet mobile par rapport à une frontière prédéterminée définissant une zone de confinement.

2. Appareil selon la revendication 1, dans lequel ledit détecteur de mouvement est un dispositif de systèmes micro électromécaniques, MEMS, ou dans lequel ledit détecteur de mouvement est un capteur de vibration omnidirectionnel.

3. Appareil selon la revendication 1, dans lequel un emplacement prédéterminé à l'intérieur de la zone de confinement est utilisé comme emplacement de départ initial du sujet mobile.

4. Appareil selon la revendication 1, dans lequel les données GNSS comprennent en outre des signaux temporels GNSS, des données d'erreur de pseudodistance, des données d'assistance temporelle et/ou des données d'assistance éphéméride.

5. Appareil selon la revendication 1, dans lequel le sujet mobile est un être humain ou un animal.

6. Procédé de suivi d'un sujet mobile basé sur des données de Systèmes de Localisation et de Navigation par Satellites, GNSS, dans lequel les données GNSS comprennent des signaux de position, vitesse, temps, PVT, GNSS, le procédé étant effectué par un appareil (50) attaché au sujet mobile, ou porté par celui, le procédé comprenant les étapes consistant à :
détecter un mouvement du sujet mobile indépendamment des données GNSS avec un détecteur de mouvement (55) ;
recevoir les données GNSS avec une unité de réception et de corrections de signal (51);
générer une position GNSS et une vitesse GNSS à partir des données GNSS reçues avec un moteur PVT (52) ;
déterminer une position et une vitesse exploitables du sujet mobile, avec une unité de position et de vitesse exploitables (53), la position et la vitesse exploitables étant des quantités dérivées de
la position GNSS et la vitesse GNSS,
la confirmation de mouvement du sujet mobile par des résultats de détection du détecteur de mouvement, et
des métriques de solution GNSS, des métriques de signal GNSS, et une position et une vitesse exploitables antérieures,
dans lequel les métriques de solution GNSS comprennent une dilution horizontale de précision, une erreur de position horizontale estimée, une erreur de vitesse estimée, la dilution horizontale de précision multipliée par l'erreur de position horizontale estimée, la dilution horizontale de précision multipliée par l'erreur de vitesse estimée, ou toute combinaison de celles-ci,
dans lequel les métriques de signal GNSS comprennent une quantité représentative du rapport signal sur bruit GNSS observable agrégé et/ou une quantité représentative du rapport signal sur bruit GNSS éligible agrégé, le terme observable signifiant tous les signaux GNSS utilisés pour déterminer la position et la vitesse GNSS, et le terme éligible signifiant tous les signaux GNSS décodables émanant de satellites au-dessus d'un seuil d'élévation prédéterminé,
dans lequel la position et la vitesse exploitables antérieures sont maintenues en réponse au fait qu'il n'est détecté aucun mouvement du sujet mobile,
de sorte que la position et la vitesse exploitables suivent la position GNSS et la vitesse GNSS très étroitement sous des conditions de signal GNSS et vitesse GNSS favorables, cessent de suivre la position et la vitesse GNSS si les conditions de signal GNSS et/ou la vitesse GNSS sont inférieures à des niveaux acceptables ; et évaluer, avec une unité de test de frontière (58), la position et la vitesse exploitables du sujet mobile par rapport à une frontière prédéterminée définissant une zone de confinement.

7. Procédé selon la revendication 6, dans lequel un emplacement prédéterminé à l'intérieur de la zone de confinement est utilisé comme emplacement de départ initial du sujet mobile.

8. Procédé selon la revendication 6, dans lequel les données GNSS comprennent en outre des signaux temporels GNSS, des données d'erreur de pseudodistance, des données d'assistance temporelle et/ou des données d'assistance éphéméride.

9. Procédé selon la revendication 6, dans lequel le sujet mobile est un être humain ou un animal.

10. Support de stockage lisible par ordinateur sur lequel est enregistré un programme pour amener un ordinateur à effectuer un procédé de suivi d'un sujet mobile pour détecter une violation de frontière basé sur des données de Systèmes de Localisation et de Navigation par Satellites, GNSS, dans lequel les données GNSS comprennent des signaux de position, vitesse, temps, PVT, GNSS, le procédé étant effectué par l'ordinateur (50) attaché au sujet mobile, ou porté par celui-ci, le procédé comprenant les étapes consistant à :
détecter un mouvement du sujet mobile indépendamment des données GNSS avec un détecteur de mouvement (55) ;
recevoir les données GNSS avec une unité de réception et de corrections de signal (51);
générer une position GNSS et une vitesse GNSS à partir des données GNSS reçues avec un moteur PVT (52) ;
déterminer une position et une vitesse exploitables du sujet mobile, avec une unité de position et de vitesse exploitables (53), la position et la vitesse exploitables étant des quantités dérivées de
la position GNSS et la vitesse GNSS,
la confirmation de mouvement du sujet mobile par des résultats de détection du détecteur de mouvement (55), et
des métriques de solution GNSS, des métriques de signal GNSS, et une position et une vitesse exploitables antérieures,
dans lequel les métriques de solution GNSS comprennent une dilution horizontale de précision, une erreur de position horizontale estimée, une erreur de vitesse estimée, la dilution horizontale de précision multipliée par l'erreur de position horizontale estimée, la dilution horizontale de précision multipliée par l'erreur de vitesse estimée, ou toute combinaison de celles-ci,
dans lequel les métriques de signal GNSS comprennent une quantité représentative du rapport signal sur bruit GNSS observable agrégé et/ou une quantité représentative du rapport signal sur bruit GNSS éligible agrégé, le terme observable signifiant tous les signaux GNSS utilisés pour déterminer la position et la vitesse GNSS, et le terme éligible signifiant tous les signaux GNSS décodables émanant de satellites au-dessus d'un seuil d'élévation prédéterminé,
dans lequel la position et la vitesse exploitables antérieures sont maintenues en réponse au fait qu'il n'est détecté aucun mouvement du sujet mobile,
de sorte que la position et la vitesse exploitables suivent la position GNSS et la vitesse GNSS très étroitement sous des conditions de signal GNSS et vitesse GNSS favorables, cessent de suivre la position et la vitesse GNSS si les conditions de signal GNSS et/ou la vitesse GNSS sont inférieures à des niveaux acceptables ; et évaluer, avec une unité de test de frontière (58), la position et la vitesse exploitables du sujet mobile par rapport à une frontière prédéterminée définissant une zone de confinement.
